# EUROPEAN PATENT APPLICATION

(11) **EP 1 274 029 A1**
(43) Date of publication of application: **08.01.2003**
(21) Application number: 01919879.5
(22) Date of filing: 10.04.2001
(51) Int. Cl.: G06F 17/60, G06F 19/00, G06F 13/00

(54) **INFORMATION MANAGEMENT SYSTEM AND INFORMATION MANAGEMENT METHOD**

(30) Priority: 10.04.2000 JP 2000147097; 05.06.2000 JP 2000168315
(71) Applicant: Sony Corporation, Tokyo 141-0001 (JP)
(72) Inventor: KOMATSU, Masashige, c/o SONY CORPORATION, Tokyo 141-0001 (JP); TSUYAMA, Fumio, c/o SONY CORPORATION, Tokyo 141-0001 (JP); AIZAWA, Masako, c/o SONY CORPORATION, Tokyo 141-0001 (JP); SAWADA, Yoshiaki, c/o SONY CORPORATION, Tokyo 141-0001 (JP)
(74) Representative: Horner, David Richard
(86) International application number: JP0103099
(87) International publication number: WO01084403

(57) **Abstract**

An information management system according to the present invention provides a new communication tool and community space. An information image card which contains image data expressing a sender who sends information and related information such as a recommended URL and the e-mail address of the sender is distributed to a plurality of users. The recipient user uses the information image card as a portal tool for obtaining information by using client software in a computer, then obtains the information contained in the information image card, and carries out a function attached to the information image card. In this case, detailed information related to the information image card is monistically managed by an information image card management server and the detailed information is push-distributed to the recipient when the client software is started. Even when the information attached to the information image card is updated or deleted, the sender need not redistribute the information image card to the plurality of users and the recipient can constantly obtain the latest information from the information image card.

## Description

### Technical Field

This invention relates to an information management system and the like, and particularly to an information management system using an information image card.

### Background Art

As the Internet is popularly used, many corporations not only transmit information to users through the web but also frequently update the contents of their websites and communicate with users by using electronic mails and bulletin boards, thus endeavoring to acquire regular visitors to the websites. On the other hand, users not only simply obtain information through the web but also actively communicate by using the web and electronic mails.

Since the communication through the Internet has been thus diversified and information has been increasing, for corporations which intend to expand their network business, it is very important to transmit information to users as quickly as possible and acquire secure access to their own websites. Moreover, there exists a demand by users for exchanging information with one another and expanding the communication circles more efficiently.

Recently, as a communication tool on the Internet, a method using a so-called "information image" is proposed in which image information and related information for causing an operator to generate a predetermined operation based on the image information are processed as one handling unit (for example, Japanese Patent Application 2000-083291).

This information image enables batched handling of a plurality of operations associated with one image. The information image can cyclically lead users to a plurality of pieces of information, or it can manage a plurality of pieces of information as a group and lead users to the group. Therefore, the information image can be a very effective leading measure for information providers.

### Disclosure of the Invention

In view of the above-described social and technical backgrounds, it is an object of the present invention to provide a new communication tool of a cyber business card system using an information image that can be distributed over the network.

It is another object of the present invention to provide an information management system which monistically manages the distribution of a new communication tool of a cyber business card system to be distributed over the network, thus enabling update and deletion of information accompanying the communication tool and easy tracing of a transmission destination.

It is still another object of the present invention to carry out exchange and propagation of information more effectively by providing an exchange space for a new communication tool of a cyber business card system to be distributed over the network.

The other objects of the present invention will be clarified in the following description.

According to a first aspect of the present invention, there is provided an information management system comprising one or more clients capable of using an information image card apparatus, an information image card management server for managing the information image card apparatus, and a network for connecting the clients with the information image card management server in such a manner as to enable bidirectional communication, wherein the information image card apparatus is constituted as an information unit having image information and related information linked with each other and comprises a parent card apparatus held at the client and a child card apparatus which can be distributed over the network, and wherein the child card apparatus is transmitted to a recipient as an attachment file of an electronic mail.

Preferably, the child card apparatus contains address information of a sender and leads to mail preparation using the address information of the sender as a transmission destination in response to the operation by the recipient. The information image card apparatus is usable on client software for information image, and the child card is made usable by expansion on the client software for information image. The information image card management server monistically manages the distribution of the child card apparatus over the network. A change of an information image card which is made on the basis of the parent card apparatus is reflected on all the child card apparatuses distributed over the network.

According to another aspect of the present invention, there is provided an information image card management server for managing an information image card apparatus constituted as an information unit having image information and related information linked with each other, wherein the information image card apparatus comprises a parent card apparatus held at a client and a child card apparatus which can be distributed on a network, and wherein the information image card management server transmits the child card to a recipient as an attachment file of an electronic mail in response to a request from a sender.

Preferably, the information image card management server monistically manages the distribution of the child card apparatus over the network. In the information image card management server, a change of an information image card which is made on the basis of the parent card apparatus is reflected on all the child card apparatuses distributed over the network.

According to still another aspect of the present invention, there is provided a program for causing a computer to function as the information image card management server, and a computer-readable storage medium for holding the program.

According to still another aspect of the present invention, there is provided a client capable of holding an information image card apparatus constituted as an information unit having image information and related information linked with each other, wherein the information image card apparatus comprises aparent card apparatus held at the client and a child card apparatus which can be distributed on a network, and wherein the child card apparatus is generated on the basis of the parent card apparatus held thereat and the child card is transmitted as an attachment file of an electronic mail.

Preferably, the information image card apparatus is usable on client software for information image, and the child card can be transmitted via the client software for information image.

According to still another aspect of the present invention, there is provided a client capable of holding an information image card apparatus constituted as an information unit having image information and related information linked with each other, wherein the information image card apparatus comprises a parent card apparatus held at the client and a child card apparatus which can be distributed on a network, and wherein the client has client software for information image for receiving and expanding the child card apparatus generated on the basis of the parent card apparatus held by a sender.

Preferably, the child card apparatus contains address information of the sender and leads to mail preparation using the address information of the sender as a transmission destination in response to the operation by a recipient.

According to still another aspect of the present invention, there is provided a program for causing a computer to function as the client, and a computer-readable storage medium for holding the program.

According to still another aspect of the present invention, there is provided an information management method using an information image card constituted as an information unit having image information and related information linked with each other, the method comprising a step for an information image card management server to accept a request from one client and issue a parent card apparatus proper to the one client, a step for the client to issue a child card apparatus on the basis of the parent card apparatus, and a step of transmitting the child card apparatus as an attachment file to another client.

Preferably, another client has a step of expanding the child card on client software for information image. The child card apparatus contains address information of a sender, and has a step of leading to mail preparation using the address information of the sender as a transmission destination in response to the operation by a recipient.

### Brief Description of the Drawings

Fig.1 is a schematic structural view showing main constituent elements of an information management system according to an embodiment of the present invention.
Fig.2 is a schematic structural view showing main constituent elements of an information management system according to an embodiment of the present invention.
Fig.3 is a block diagram showing an exemplary user/client of an information management system according to an embodiment of the present invention.
Fig.4 is a block diagram showing an exemplary information image card management server of an information management system according to an embodiment of the present invention.
Fig.5 is a block diagram showing an exemplary information image card generation server of an information management system according to an embodiment of the present invention.
Fig.6 is a block diagram showing an exemplary information image card web server of an information management system according to an embodiment of the present invention.
Fig.7 is a block diagram showing an exemplary child card information management section of an information management system according to an embodiment of the present invention.
Fig.8 is a block diagram showing an exemplary diary information management section of an information management system according to an embodiment of the present invention.
Fig.9 is a block diagram showing an exemplary information image client software administrative server of an information management system according to an embodiment of the present invention.
Fig.10 is a block diagram showing an exemplary page structure of an information image card web server of an information management system according to an embodiment of the present invention.
Fig.11 is an explanatory view showing an exemplary display of a page of an information image card web of an information management system according to an embodiment of the present invention.
Fig.12 is a block diagram showing an exemplary flow of generation of an information image card by an information management system according to an embodiment of the present invention.
Fig.13 is a flowchart showing an exemplary flow of generation of an information image card by an information management system according to an embodiment of the present invention.
Fig.14 is an explanatory view showing an exemplary display of a page of an information image card web of an information management system according to an embodiment of the present invention.
Fig.15 is an explanatory view showing an exemplary display of a page of an information image card web of an information management system according to an embodiment of the present invention.
Fig.16 is an explanatory view showing an exemplary display of a page of an information image card web of an information management system according to an embodiment of the present invention.
Fig.17 is an explanatory view showing an exemplary display of a page of an information image card web of an information management system according to an embodiment of the present invention.
Fig.18 is an explanatory view showing an exemplary display of a page of an information image card web of an information management system according to an embodiment of the present invention.
Fig.19 is an explanatory view showing an exemplary display of a page of an information image card web of an information management system according to an embodiment of the present invention.
Fig.20 is an explanatory view showing the data structure of user information managed in an information management system according to an embodiment of the present invention.

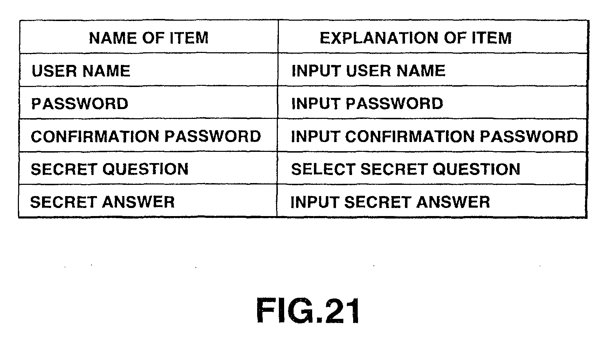

Fig.21 is an explanatory view showing the data structure of log-in information managed in an information management system according to an embodiment of the present invention.
Fig.22 is an explanatory view showing an exemplary display of a page of an information image card web of an information management system according to an embodiment of the present invention.
Fig.23 is an explanatory view showing an exemplary display of a page of an information image card web of an information management system according to an embodiment of the present invention.
Fig.24 is an explanatory view showing the data structure of card information managed in an information management system according to an embodiment of the present invention.
Fig.25 is an explanatory view showing an exemplary display of a page of an information image card web of an information management system according to an embodiment of the present invention.
Fig.26 is an explanatory view showing an exemplary display of a page of an information image card web of an information management system according to an embodiment of the present invention.
Fig.27 is an explanatory view showing an exemplary display of a page of an information image card web of an information management system according to an embodiment of the present invention.
Fig.28 is an explanatory view showing an exemplary display of a page of an information image card web of an information management system according to an embodiment of the present invention.
Fig.29 is an explanatory view showing an exemplary display of a page of a parent card web of an information image card according to an embodiment of the present invention.
Fig.30 is an explanatory view showing an exemplary display of a page of a child card web of an information image card according to an embodiment of the present invention.
Fig.31 is a block diagram showing an exemplary flow of transmission of an information image card by an information management system according to an embodiment of the present invention.
Fig.32 is a flowchart showing an exemplary flow of transmission of an information image card by an information management system according to an embodiment of the present invention.
Fig.33 is an explanatory view showing an exemplary display of a page of an information image card web of an information management system according to an embodiment of the present invention.
Fig.34 is an explanatory view showing an exemplary display of a page of an information image card web of an information management system according to an embodiment of the present invention.
Fig.35 is an explanatory view showing an exemplary display of a page of an information image card web of an information management system according to an embodiment of the present invention.

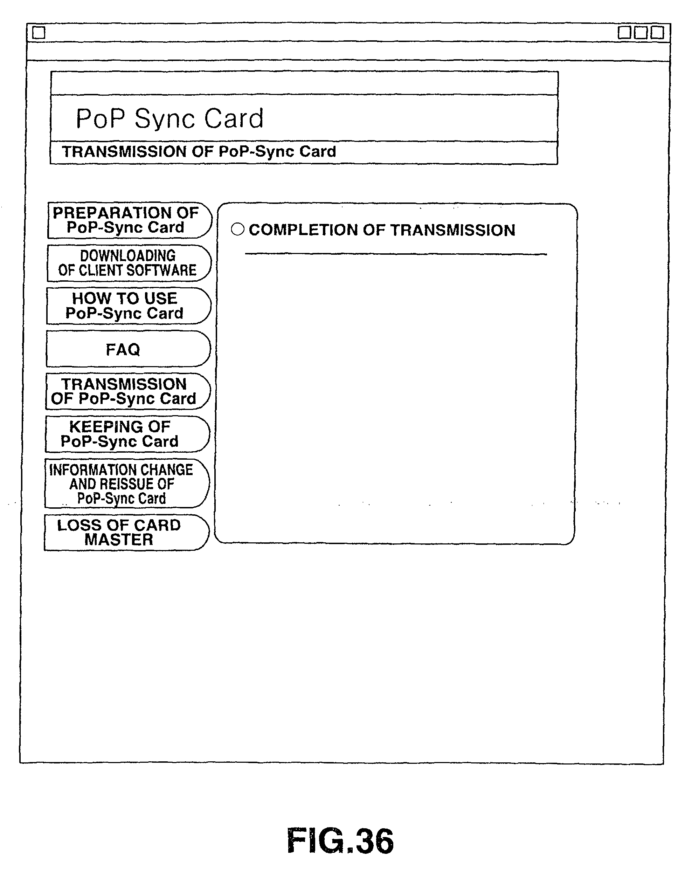

Fig.36 is an explanatory view showing an exemplary display of a page of an information image card web of an information management system according to an embodiment of the present invention.
Fig.37 is a flowchart showing an exemplary flow of reception of an information image card by an information management system according to an embodiment of the present invention.
Fig.38 is a block diagram showing an exemplary address display function by an information management system according to an embodiment of the present invention.
Fig.39 is a block diagram showing an exemplary flow of information update of an information image card by an information management system according to an embodiment of the present invention.
Fig.40 is a flowchart showing an exemplary flow of information update of an information image card by an information management system according to an embodiment of the present invention.
Fig.41 is an explanatory view showing an exemplary display of a page of an information image card web of an information management system according to an embodiment of the present invention.
Fig.42 is an explanatory view showing an exemplary display of a page of an information image card web of an information management system according to an embodiment of the present invention.
Fig.43 is an explanatory view showing an exemplary display of a page of an information image card web of an information management system according to an embodiment of the present invention.
Fig.44 is an explanatory view showing an exemplary display of a page of an information image card web of an information management system according to an embodiment of the present invention.
Fig.45 is a flowchart showing an exemplary flow of update of user information of an information image card by an information management system according to an embodiment of the present invention.
Fig.46 is an explanatory view showing an exemplary display of a page of an information image card web of an information management system according to an embodiment of the present invention.
Fig.47 is an explanatory view showing an exemplary display of a page of an information image card web of an information management system according to an embodiment of the present invention.
Fig.48 is an explanatory view showing an exemplary display of a page of an information image card web of an information management system according to an embodiment of the present invention.
Fig.49 is an explanatory view showing an exemplary display of a page of an information image card web of an information management system according to an embodiment of the present invention.
Fig.50 is an explanatory view showing an exemplary display of a page of an information image card web of an information management system according to an embodiment of the present invention.
Fig.51 is a flowchart showing an exemplary flow of entry in a diary of an information image card by an information management system according to an embodiment of the present invention.
Fig.52 is an explanatory view showing an exemplary display of a page of an information image card web of an information management system according to an embodiment of the present invention.
Fig.53 is an explanatory view showing an exemplary display of a page of an information image card web of an information management system according to an embodiment of the present invention.
Fig.54 is an explanatory view showing the data structure of entry in a diary of an information management system according to an embodiment of the present invention.
Fig.55 is an explanatory view showing an exemplary display of a page of an information image card web of an information management system according to an embodiment of the present invention.
Fig.56 is an explanatory view showing an exemplary display of a page of an information image card web of an information management system according to an embodiment of the present invention.
Fig.57 is a flowchart showing an exemplary flow of browsing through a diary of an information management system according to an embodiment of the present invention.
Fig.58 is an explanatory view showing an exemplary display of a page of an information image card web of an information management system according to an embodiment of the present invention.
Fig.59 is an explanatory view showing the data structure of comment entry in an information management system according to an embodiment of the present invention.
Fig.60 is a block diagram showing a flow of exchange of an information image card in an information management system according to an embodiment of the present invention.
Fig.61 is a flowchart showing a flow of exchange of an information image card in an information management system according to an embodiment of the present invention.
Fig.62 is an explanatory view showing the state of keeping an information image card in an information management system according to an embodiment of the present invention.
Fig.63 is a flowchart showing a flow of registration of exchange of an information image card in an information management system according to an embodiment of the present invention.
Fig.64 is an explanatory view showing the state of registration and exchange of an information image card in an information management system according to an embodiment of the present invention.

### Best Mode for Carrying Out the Invention

Preferred embodiments of the information management system and the like according to the present invention will now be described in detail with reference to the attached drawings. In the following description and the attached drawings, the constituent elements having substantially the same functions and structures are denoted by the same numerals and therefore will not be described further in detail.

### 1. Outline of business model

First, in order to facilitate the understanding of the information management system and the like according to the present invention, the outline of an exemplary business model using an information image card apparatus (hereinafter, simply referred to as an information image card) will be described.

According to this business model using an information image card, an information image card on which image data such as a digital photograph and related information such as personal information, URL (uniform resource locator) information over the network and electronic mail address are linked with each other is distributed over the network. Thus, it is possible to form a cyber community space for new cyber communication or for exchange of information.

The information image card is an object forming a so-called cyber business card (or electronic business card), which can be distributed over the network. The information image card is constituted by linking image data such as a photograph of an owner's face or an emblem of a corporation with related information such as the name of an owner or the name, address, telephone number, e-mail address and homepage address of a corporation. The information image card is constituted by a parent card (also referred to as a master card, card master, management card, master icon, or parent icon) and a child card (also referred to as a distributed card or child icon). The parent card can carry out basic operations related to the information image card such as issue and transmission of the child card, update of information, and entry in a diary. The parent card is proper to each user. A plurality of child cards can be issued on the basis of the parent card. The child cards can be distributed over the network.

The owner of the information image card (owner of the parent card) can distribute or exchange its own child card with a third party, as an attachment file of an electronic mail, or via a community space formed through a diary, or via a bulletin board constituted as a place for exchanging the information image card.

Thus, the distribution of the distributed or exchanged information image card is monistically managed by the information image card management server. Therefore, if information contained in the parent card of the information image card is changed, the contents of the change are reflected on all the child cards, thus enabling simultaneous update.

Moreover, in the information management system using the information image card according to the present embodiment, a community space such as a diary or a bulletin board is provided as a tool for exchanging the information image card.

### 2. Explanation of concepts proper to this system using information image card

In order to facilitate the understanding of the present invention, several concepts proper to the information management system using the information image card will be explained. These concepts include "information image," "image data," "related information," "client software for information image (information image folder)," "information image card," "parent card," "child card," "diary," "community space" and the like.

### 2.1. Information image

First, the structure of an information image, which plays a central role in the information management system according to the present embodiment, will be described.

The "information image" used in the present embodiment is an information file constituted as an information unit having image data and related datalinked with each other or as an information object. Specifically, the information image is constituted as a handling unit by linking image data such as a photograph of an owner's face or an emblem of a corporation with related information such as the name of an owner or the name, address, telephone number, e-mail address and homepage address of a corporation. The operation to transmit the information image over the network can be realized by single handling processing.

In this manner, the information image is mainly characterized in that (1) it is constituted by image data and related data, and that (2) the image data and related data can be processed as one handling unit. Moreover, the information image is a new communication tool which enables an operator to access various kinds of information over the network by using image data displayed on a display device of a client as a portal. The information image constitutes a so-called personal portal site of an information image producer.

### 2.2. Image data

The "image data" as one constituent element of the information image can be specified on the basis of image specification information such as file name or identification information embedded inside. The image data acts to be displayed as an image on the information display device of the client. More specifically, the image data is a data stream related to an image which employs various formats such as GIF format, JPG format or PCX format.

In the present embodiment, image data used as an information image card, which will be described later, is an image file that can identify the owner of the information image card, for example, a digital image file related to a photograph of the owner's face or an emblem of the corporation, so as to be suitable as a cyber business card.

### 2.3. Related information

The "related information" as the other constituent element of the information image includes static information such as the name and address of the owner, and dynamic information such as the e-mail address or URL of the homepage which leads the operator of the terminal to a specified operation by using image information as a clue. The static information is data registered in advance by the user and managed on a database of the information image card management server. On the other hand, the dynamic information is, for example, information (URL or IP address) for specifying the address of information over the network when it is intended that the operator of the terminal is caused to refer to the information at a specified site. Alternatively, when it is intended that a specified program is to operate, the dynamic information may be the name of the program or the program itself. For example, designation information for obtaining new image information from the server can be used.

In the present embodiment, in order to enable processing of the image information and related information of the above-described configuration as one handling unit or object, related information is embedded in specified image information. A method for embedding related information in image information is described in detail in the Japanese Patent Application 2000-083291, which is a patent application relating to an information image. The method is not directly related to the present invention and therefore will not be described here in detail.

### 2.4. Client software for information image (information image folder)

The client software for information image is software for making the information image usable at the client (user) such as a computer. The client software for information image is managed by an information image client software administrative server, which will be described later. The user who intends to use the information image or the information image card starts the client software for information image incorporated in the client. Then, the user can prepare the information image card by carrying out drag-and-drop of the information image distributed thereto through a mail or the icon of the information image card displayed on the web browser into an information image folder displayed, for example, in a folder format, on the display device of the client.

If the client software for information image is not incorporated in the computer of the client, the user can access the information image client software administrative server via the network from the client and download the client software for information image.

The client software for information image is constituted to display a plurality of folders on the display device of the computer of the client, as will be described later. When using the information image card, the user drags and drops image data attached to a mail distributed to the user, into the folder of the client software. As a result, the client software for information image cooperates with the information image, thus enabling the use of the information image card.

In the folder, the image data o f the information image is displayed. To display the related information, the operator may operate the mouse to move the pointer to the position of the information image card and then make right clicking on the mouse. The details of the operation of the information image card will be described later.

In the information management system according to the present embodiment, the client software for information image employs such configuration that it is displayed in the folder format on the display device of the client. However, the present invention is not limited to this embodiment. It is also possible to start the client software for information image invisibly to the user so as to constitute the information image card as if it existed on the desktop.

The client software for information image logs in to the information image client software administrative server at the time of start and carries out communication to exchange information. Such configuration enables report to the client in a push system in the case where information associated with the information image card incorporated in the client is updated. At the same time, if there is a change such as deletion of the information image card registered to the client from the folder, this change is reported to the information image client software administrative server. Such configuration enables easy and secure tracing of information which changes moment by moment on the network, as in the monistic management of information in the information management system according to the present embodiment.

### 2.5. Information image card

The information image card according to the present embodiment will now be described. The basic structure of the information image card is similar to that of the above-described information image. However, in the information management system according to the present embodiment, the information image card functions as a so-called cyber business card which is monistically managed by the information image card management server. The information image card can be classified as a personal card or a corporate card in accordance with the characteristics of the card. The personal card is typically a personal information card on which image information, that is, a photograph of the owner's face, and related information, that is, personal information of the owner, are linked with each other. The corporate card is typically a corporate information card on which image information, that is, a logo of the owner corporation, and related information, that is, service information provided by the owner corporation, are linked with each other. Although in the present embodiment, the information image including image data and related information is described as an information image card, the present invention is not limited to a card and may be catalog information of a product or service provided by the corporation.

The information image card is issued by the information image card management server on condition of registration of user information and card information. The user information is basic information of the owner of the information image card. The card information is personal information attached to a child card. As is described already, the information image card is constituted by a parent card which is held by the owner's hand and can carry out operation on various kinds of information, and a child card which can be away from the owner's hand and distributed over the network.

The characteristics of the parent card and the child card will be described hereinafter.

### 2.6. Parent card

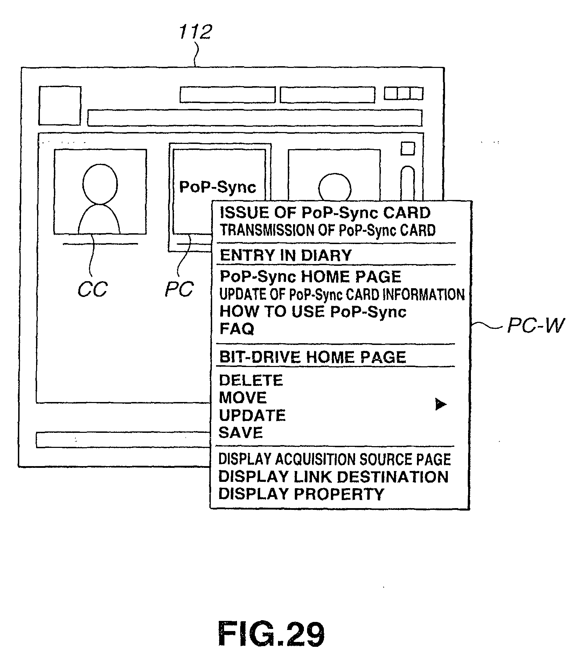

The parent card is also referred to as a card master or parent icon. In the drawings, it is represented by "PC." When the user information and the card information are registered to the information image card management server, the information image card is issued by the information image card management server and is held within the client software of the owner of the information image card. On the display device of the client, a symbolic image is displayed which easily clarifies that the card is the parent card in a different mode from the later-described child card. In the present embodiment, characters of "PoP-Sync" are displayed. When right clicking is made on the image of the parent card, an operation window is displayed, and as the related information of the parent card to be linked, there is displayed information for carrying out operations such as issue and transmission of the child card, entry in the owners's own diary, change of information (card information) associated with the child card, access to the information image card management server, and deletion, shift and update of the parent card. The preparation method and the operation method for the parent card will be described later with reference to Fig.29.

### 2.7. Child card

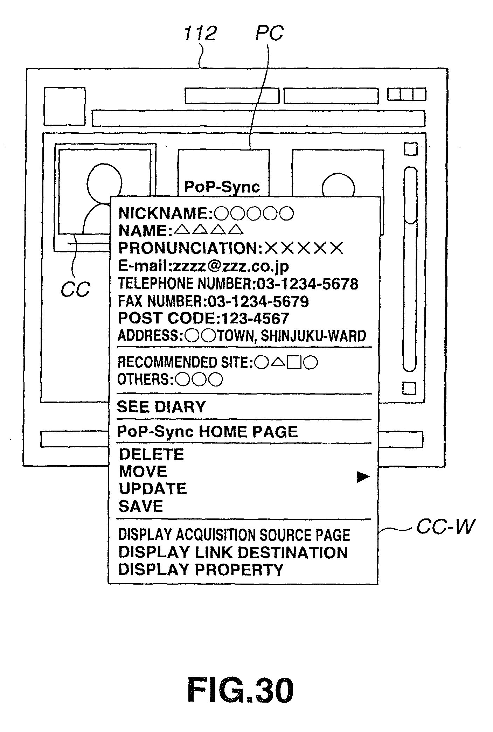

The child card is also referred to as a PoP-Sync card, distributed card, or child icon. In the drawings, it is represented by "CC." The child card is a card to be transmitted as an attachment file of an electronic mail from the client of the owner of the information image card or a card to be exchanged via a community space such as a diary. Since the child card functions as a cyber business card, an image capable of identifying the owner, for example, a photograph of the owner's face or a corporate logo, is displayed on the display device of the client. When right clicking is made on such an image, an operation window is displayed, and as the related information of the child card to be linked, access information to the diary of the distributor is displayed as well as the address, name and telephone number of the distributor. The preparation method, the distribution method and the exchange method for the child card will be described later with reference to Fig.30.

### 2.8. Diary

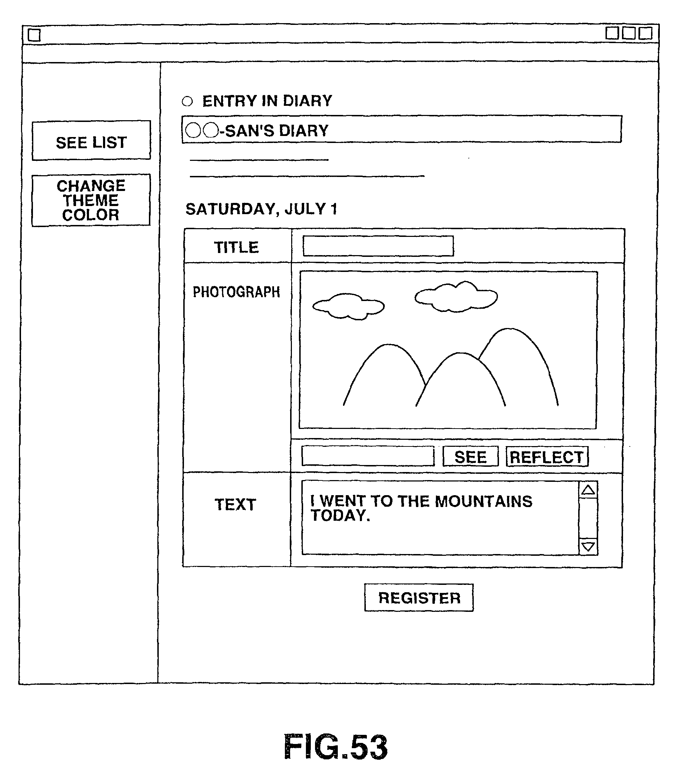

The diary is a public information space which can be updated every predetermined time period, for example, everyday, and also is an information exchange space proper to the owner of the information image card. The owner of the information image card can write a title, image information and text information into his/her own diary as in a picture diary, as shown in Fig.53. The contents of the diary are made public as public information and a third party can browse through the. contents via a distributed child card. The person browsing through the diary can leave a comment on the contents of the diary or can request exchange of the information image card.

In this specification, the public information space proper to the owner of the information image card in which the contents can be updated when necessary, as described above, is referred to as a diary. However, as a matter of course, the public information space of the same function can also be called by another name.

### 2.9. Community space

The diary constitutes a kind of community space. However, while the diary is a person-to-person information exchange space, the community space in the present embodiment can be expanded to an information exchange space for information exchanges among unspecified multiple users. The community space can adopt various modes. For example, a public space can be constituted in which a bulletin board for each subject such as educational issues or environmental issues is provided to enable exchange of the information image card by writing to the bulletin board.

The concepts proper to the information management system using the information image card are described above in order to facilitate the understanding of the present invention. Although there are several other concepts proper to the present information management system, these concepts will be explained in appropriate parts of the following description.

### 3. System structure of information management system

The system structure for realizing the information management system according the present embodiment will now be described with reference the attached drawings.

### 3.1. Overall structure of the information management system

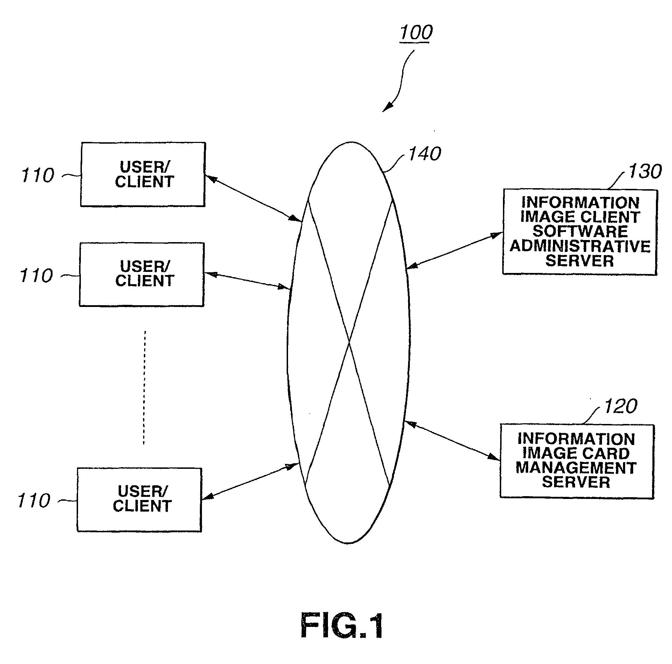

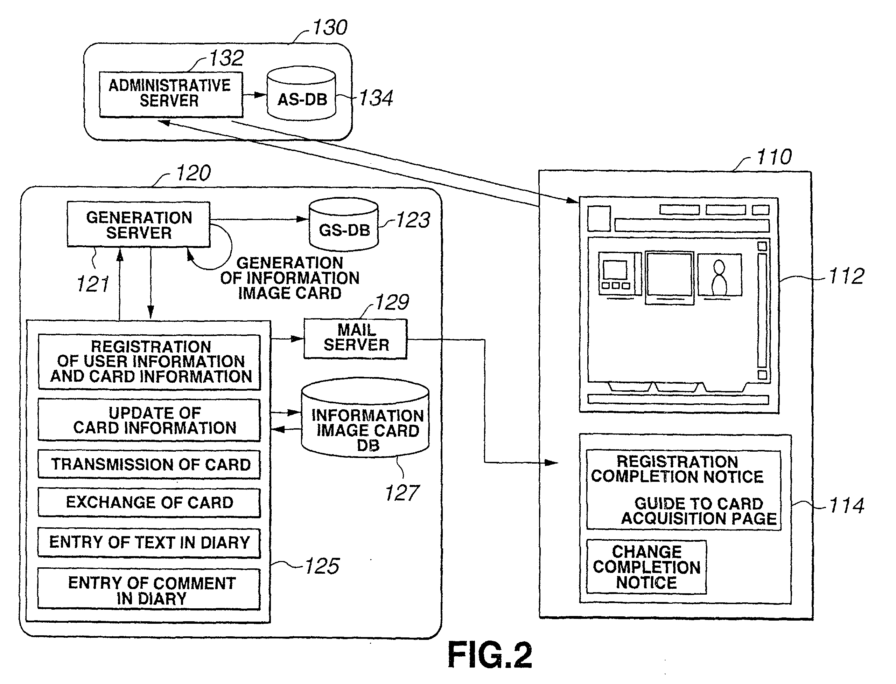

As shown in Figs.1 and 2, an information management system 100 according to the present embodiment adopts a structure in which a plurality of users (clients) 110 capable of owning an information image card, an information image card management server 120 for monistically managing the distribution of the information image card, and an information image client software administrative server 130 for providing client software for information image to enable the clients 110 to use the information image card are connected with each other by a network 140 which enables bidirectional communication such as the Internet. The structure of each of the constituent elements will now be described in detail.

### 3.2. Client 110

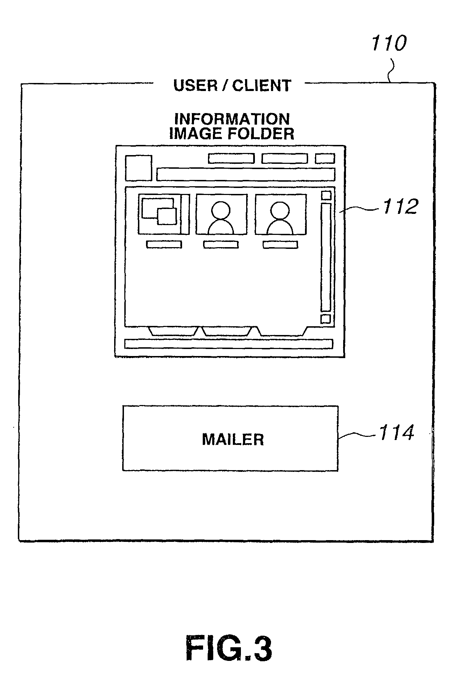

The client 110 is an information processing device such as a computer with a communication function which is connected with the network 140 so as to enable bidirectional communication. The client 110 has a function to start client software for information image, which will be described later, and to display an information image folder 112 on a display device, a mailer 114 for transmitting and receiving electronic mails via the network, and browser software which enables display and browsing of HTML files, as shown in Fig.3. The client 110 is not a special computer but a general-purpose computer. Although the client 110 is constituted as a personal computer in the example of Fig.3, it may also be constituted as a portable information terminal or a portable telephone capable of using an information image card, or a home electric appliance with an information terminal function.

The client 110 may be constituted as a sender who holds a parent card and issues and distributes a child card, or may be constituted as a receive who receives a child card from a sender, as will be described later. In any case, the client 110 needs to have a function to transmit and receive the information image card via the network and to start the client software for information image so as to use the information image card.

### 3.3. Information image card management server 120

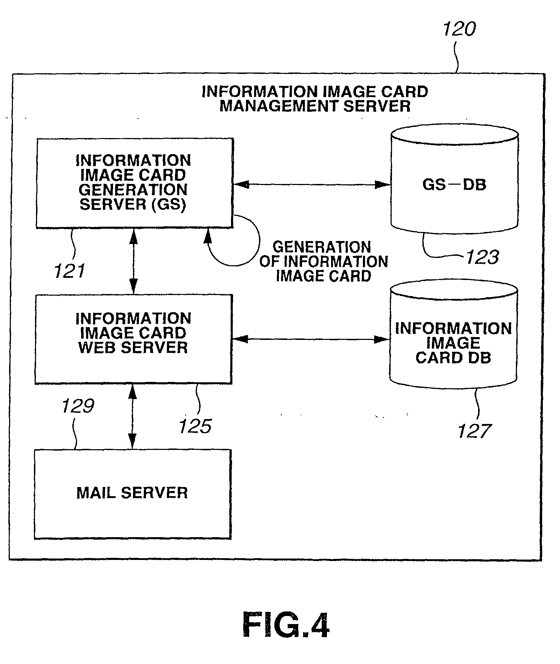

The information image card management server 120 is constituted by an information processing device such as a computer with a communication function which is connected with the network 140 so as to enable bidirectional communication, as shown in Fig.4. The information image card management server 120 has functional elements such as an information image card generation server (GS) 121, an information image card generation server database (GS-DB) 123, an information image card web server 125, an information image card database 127, and a mail server 129.

### 3.3.1. Information image card generation server 121

The information image card generation server (GS) 121 is a server for communicating with the client software installed in the client 110. Specifically, the information image card generation server (GS) 121 generates an icon of the information image card in response to an information image card generation request from the client 110 and generates related information contained in the information image card to be transmitted to each client 110, as will be described later. The information image card generation server (GS) 121 communicates with the client 110 and pushes information indicating whether each of information image cards registered to the folder in the client software of the client 110 is updated or not and update information, to the client 110.

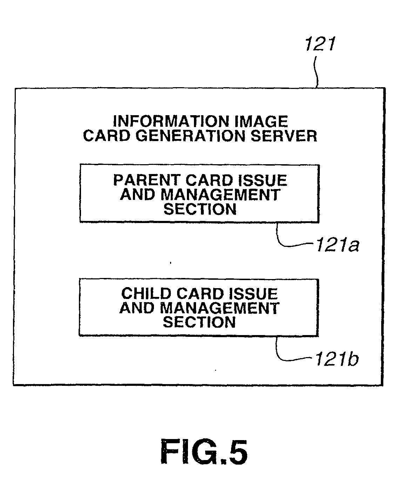

The information image card generation server (GS) 121 has a parent card issue and management section 121a having a function to issue and manage a parent card PC, and a child card issue and management section 121b having a function to issue and manage a child card CC, as shown in Fig.5.

As is described already, the parent card PC, also referred to as a card master or parent icon, is associated with basic information of the owner of the information image card and is thus held in the client 110 of the owner of the information image card. The parent card PC issue and management section 121a holds the ID of the issued parent card PC and manages the change and deletion of information related to the parent card PC.

The child card CC, also referred to as a PoP-Sync card, distributed card or child icon, is to be transmitted as an attachment file of an electronic mail from the client of the owner of the information image card or exchanged via the community space. The child card CC issue and management section 121b holds the ID of the issued and distributed child card CC in association with the ID of the parent card PC and thus manages the distribution state of the child card CC.

### 3.3.2. information image card generation server database 123

The information image card generation server database (GS-DB) 123 manages various information related to the issue of the information image card. The information image card generation server database (GS-DB) 123 is a database for managing information such as an ID list and various kinds of histories of the information image cards issued by the information image card generation server (GS) 121.

Specifically, the information image card generation server database (GS-DB) 123 is a database to which information related to the parent card and the child card registered to the folder of the client software, image data associated with the respective information image cards, and related information accessed by right clicking are registered in association with the client ID of the client software installed in the computer of the client 110.

### 3.3.3. Information image card web server 125

Information image card web server 125 constitutes a window to the client of the image management system 100 according to the present embodiment, in various phases. For example, the information image card web server 125 accepts user registration from the client 110 who wishes to prepare an information image card. The information image card web server 125 also accepts a change of the registration contents of the issued information image card. Moreover, the information image card web server 125 is a server for managing the diary, which is a personal information exchange space, and the community space such as a bulletin board, which is a public information exchange space.

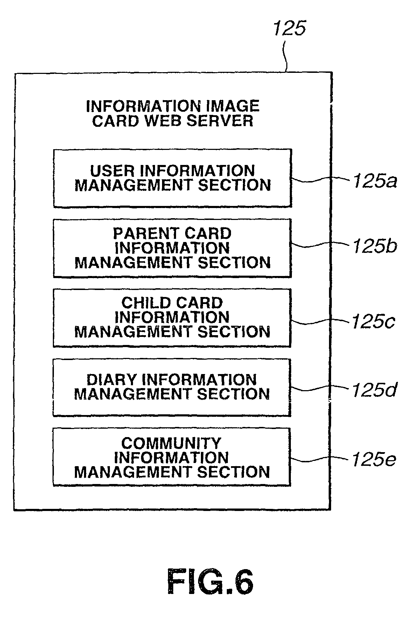

To carry out the above-described information management function, the information image card web server 125 has a user information management section 125a, a parent card PC information management section 125b, a child card CC information management section 125c, a diary information management section 125d, and a community information management section 125e, as shown in Fig.6.

The user information management section 125a manages information related to the user who requested the issue of the information image card. As will be described later, when issuing the information image card, the system requests the user to register the minimum user information for user management such as the e-mail address. The user information registered in this case is managed by the user information management section 125a.

The parent card information management section 125b manages information related to the parent card PC generated when the information image card is issued. As will be described later, the user can carry out operations such as issue and transmission of the child card CC and entry in the diary, through the parent card PC. These operation logs are monistically managed by the parent card PC information management section 125b.

The child card information management section 125c manages information related to the child card CC generated an distributed on the basis of the parent card PC. In the child card CC, not only personal information related to the user of the distribution source is embedded as static related information, but also dynamic related information is embedded such as the URL of a site to which the user of the distribution source of the child card CC wants to lead the user of the distribution destination. Moreover, the diary as the communication space of the user of distribution source can be browsed from the child card CC, and also information related to the URL of the diary is embedded in the child card CC. These pieces of information are monistically managed by the child card information management section 125c.

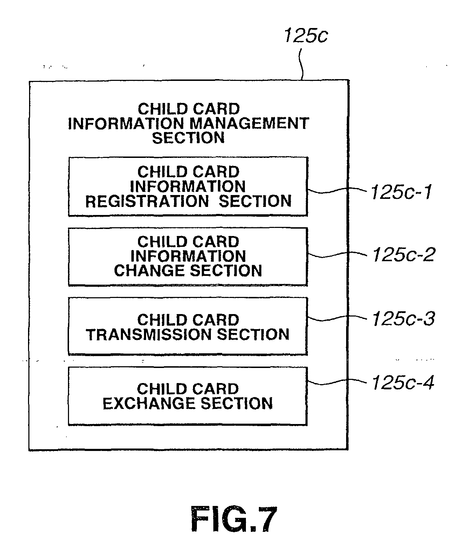

To realize the above-described function, the child card information management section 125c has a child card information registration section 125c-1 for registering the information related to the child card CC, a child card information change section 125c-3 for changing the information related to the child card CC, a child card transmission section 125c-4 for transmitting the child card CC as an attachment file of an electronic mail to another user, and a child card exchange section 125c-5 for exchanging the child card CC with another user via a community space such as the diary, as shown in Fig.7.

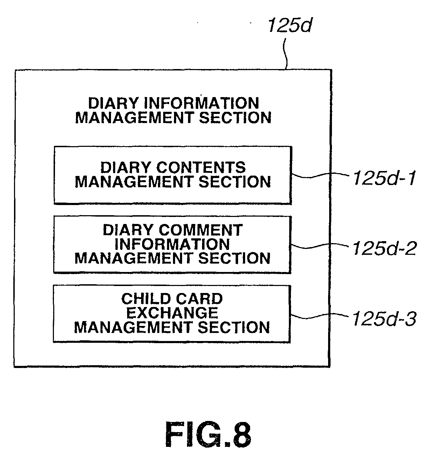

The diary information management section 125d shown in Fig.8 manages information related to the diary, which is a community space for exchanging the information image card between two individual users. As will be described later, the diary can be updated every predetermined time period, for example, everyday, and a title, image information and diary texts for each item can be pasted to the diary as in a picture diary. Moreover, comments by other users who browsed through the publicly presented diary can be pasted. Furthermore, the child cards CC can be exchanged between users through the diary. The diary information management section 125d monistically manages the logs of the above-described various information operations carried out through the diary.

To realize the above-described function, the diary information management section 125d has a diary contents management section 125d-1 for managing the title, image information and diary texts appeared in the diary, a diary comment management section 125d-2 which enables description by other users who access the publicly presented diary, and a child card exchange management section 125d-3 for managing the operation to exchange the child cards CC between users through the diary space, as shown in Fig.8.

Referring again to Fig.6, the community information management section 125e manages information related to the community space, which is a public communication space for exchanging the information image cards among unspecified multiple users. This community space monistically manages the operation information when carrying out exchange of the information image cards among users who take part in the bulletin board constituted in accordance with a specific subject such as educational issues or environmental issues.

The details of the functional constituent elements of the information image card web server 125 will be clarified in the following description of the respective operations of the information image management system 100 according to the present embodiment.

### 3.3.4. Information image card database 127

Referring again to Fig.6, the information image card database 127 holds various information related to the management and distribution of the information image card. The information image card database 127 has, for example, a bitcard_user table containing user information of a user who prepared the information image card, a citcard_cardinfo table containing information related to the information image card, a bitcard_sendcard table containing information related to the distribution history and the distribution destination of the information image card distributed to a plurality of clients, a bitcard_keep table containing information related to the exchange of the information image card over the network, a bitcard_diaryinfo table containing basic information related to the diary provided by the owner who prepared the information image card, a bitcard_diary table containing information related to the diary contents of everyday registered as the diary, and a bitcard_diarycomm table containing information related to a comment on the diary by a client who browsed through the diary.

### 3.3.5. Mail server 129

The information image card management server 120 further has the mail server 129. The mail server 129 carries out notification of the completion of user registration, notification of the URL for uploading the issued information image card to the client 110 of the user himself/herself, and sending of a mail with the information image card attached thereto, to the client 110.

### 3.4. Information image client software administrative server 130

Returning to Figs.1 and 2, the information management system 100 according to the present embodiment further has the information image client software administrative server 130. As is described already, the information image client software administrative server 130 is a server which administers the software for generating the information image folder embedded in the client 110 so as to use the information image and which carries out authentication the client software.

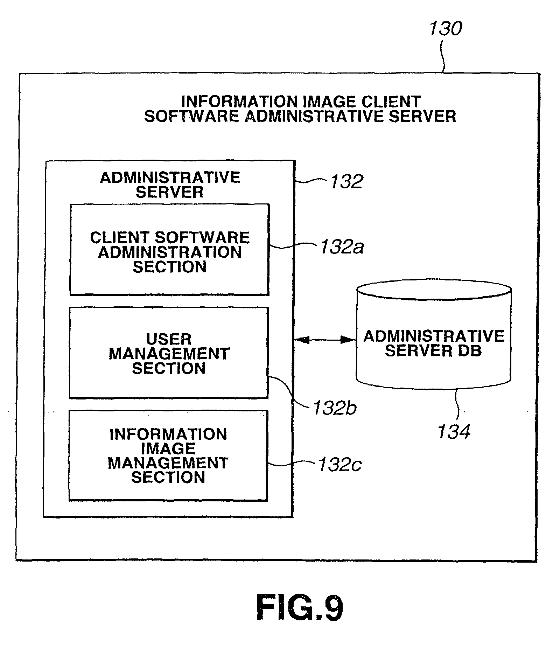

As shown in Fig.9, the information image client software administrative server 130 has an administrative server 132 and an administrative server database 134.

The administrative server 132 has a client software administration section 132a for providing the client software and the client software ID to the user and for carrying out authentication of the client software with reference to the client ID, a user management section 132b for managing the user information of the client software, and an information image management section 132c for managing the information image card started on each client software.

The administrative server database (AS-DB) 134, which is a database for administration, generates user information related to the client 110 who logged in, log-in information, access log and information image, and holds these pieces of information in association with the client ID allocated to each client 110.

As is described already, in order to use the information image card of the present system, the client software for information image must be incorporated into the client 110. When the client software for information image provided from client software administration section 132a is first incorporated into the client 110, the client software for information image requests the user to register the minimum information for user management such as the e-mail address. The user management information registered to the information image client software administrative server 130 is the registered information of the user who uses the client software, and it is not the same as the bitcard_user table, which is the user registration information held by the information image card database 127 of the information image card management server 120.

Since the details of the operation method for the information image card via the information image folder will be described later, the operation of the client software will be briefly described here. When the client 110 intends to start the information image folder of the client software, the following processing is carried out. First, the client 110 accesses the information image client software administrative server 130 and carries out authentication of the client software. If it is determined as a result of the authentication that the installed client software is normal client software, the client software is started on the computer of the client 110 and the information image folder is displayed on the display.

In this case, the client software communicates with the generation server 121 and automatically receives information related to a plurality of information image icons registered to the information image folder. The process of receiving the information related to the information image icons looks as if the information were sent from the generation server 121 by push distribution. Therefore, in the explanation of such processing in the present embodiment, it is described that information is obtained by a push system. The information distributed from the generation server 121 is, for example, information indicating what kind of information image card (child card) is registered to the information image folder, icon information representing the information image card, image data contained in the information image card, and related information registered to the information image card which is accessed by right clicking by the user.

For example, according to the information management system of the present embodiment, if there is a change in the information contained in the child card CC held in the information image folder when the client 110 starts the information image folder, the background color or peripheral color of the displayed child card CC is changed, thus notifying the user of the change. Moreover, when the information image folder is opened on the computer of the client 110, the detailed information related to an information image file registered to the folder is received from the generation server 121.

Thus, according to the information management system of the present invention, the user of the client 110 can learn the automatic update of the information on the information image card, without accessing the predetermined server to confirm whether the information on the information image card registered to the information image folder is updated or not. Moreover, the user of the client 110 can constantly receive the updated latest information image data.

### 3.5. Network

Finally, the network which connects the client 110, the information image card management server 120 and the information image client software administrative server 130 so as to enable bidirectional communication will be briefly described. This network can be constituted as the Internet using a public circuit network or as an Intranet using a closed circuit network. The specification requirement of this network is that bidirectional communication of data can be made between terminals connected to the network, irrespective of wired or wireless connection.

### 4. Application of information management system

An exemplary application of the information management system constituted as described above will now be described. The following description includes "issue of information image card," "transmission/reception of information image card," "simultaneous update of information image cards," "diary function of information image card," "exchange of information image cards" and the like.

### 4.1. Structure of information image card web

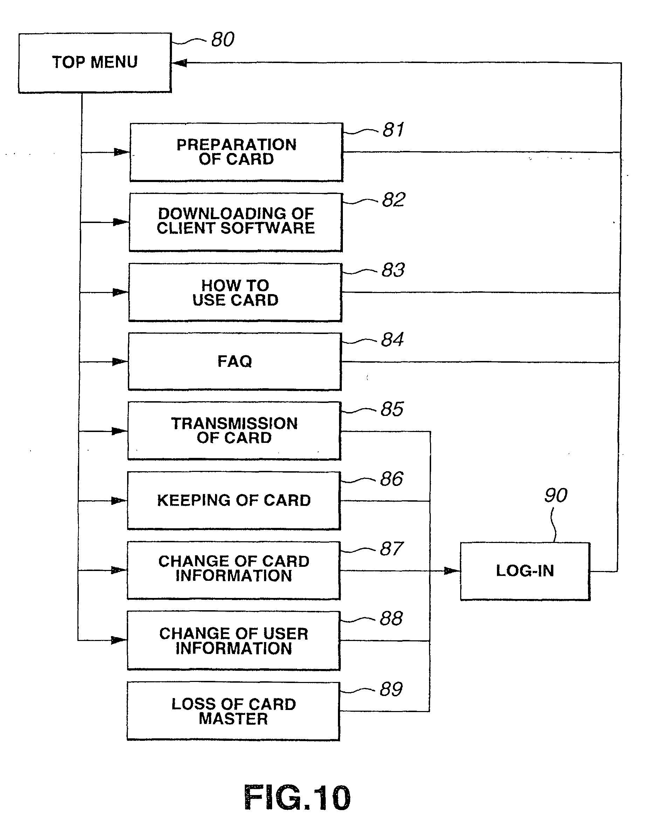

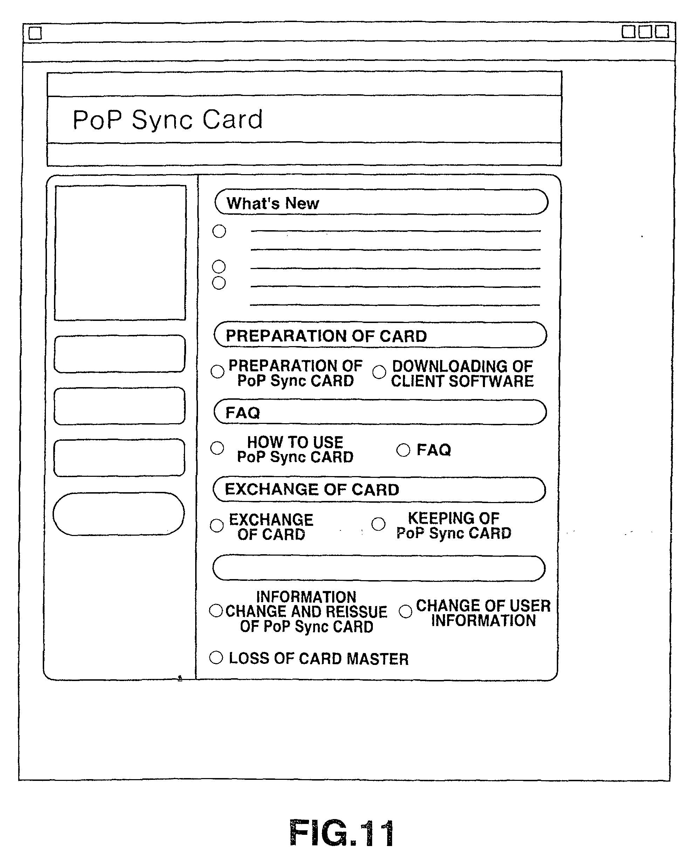

Fig.10 shows an exemplary page structure of an information image card web which operates the information management system according to the present embodiment. Fig.11 shows an exemplary display of a top page of the page structure.

First, a user who wants to prepare or use an information image card accesses a top page 80 of the information image management system as shown in Fig.11. The top page is linked with pages of "preparation of card" 81, "downloading of client software" 82, "how to use card" 83, "FAQ" 84, "transmission of card" 85, "keeping of card" 86, "change of card information" 87, "change of user information" 88, and "loss of card master" 89, as shown in Fig.10. In order to access the pages related to operation of information such as "transmission of card" 85, "keeping of card" 86, "change of card information" 87, "change of user information" 88 and "loss of card master" 89 of the above-described pages, "log-in" procedure 90 is required.

The web page for the information image management system is constituted to enable display of the above-described items. Hereinafter, each of the items will be described in detail.

The item of "preparation of card" 81 is for displaying a screen for newly preparing the information image card according to the present embodiment. This function is constituted to carry out processing on the SSL (secure sockets layer) for security.

The item of "downloading of client software" 82 is for displaying a downloading page for the client software for information image, in a separate window.

The item of "how to use card" 83 is for displaying a detailed explanatory screen with respect to the method for preparing and the method for using the information image card, for a user who is unaccustomed to the method for preparing and the method for using the information image card.

Similarly, the item of "FAQ" 84 is for displaying the explanation about the information image card and the operating environment in the form of questions and answers, for a user who is unaccustomed to the method for preparing and the method for using the information image card.

The item of "transmission of card" 85 is for displaying a screen for sending a mail containing the prepared card. This function, too, is constituted to carry out processing on the SSL for security.

The item of "keeping of card" 86 is for displaying a screen for exchanging the prepared information image card. This function, too, is constituted to carry out processing on the SSL for security.

The item of "change of card information" 87 is for displaying a screen for changing the card information of the information image card that is already registered. This function, too, is constituted to carry out processing on the SSL for security.

The item of "change of user information" 88 is for displaying a screen for changing the user information of the information image card that is already registered. This function, too, is constituted to carry out processing on the SSL for security.

The item of "loss of card master" 89 is for displaying a screen for reacquiring a lost parent card PC (card master). This function, too, is constituted to carry out processing on the SSL for security.

### 4.2. Preparation of information image card

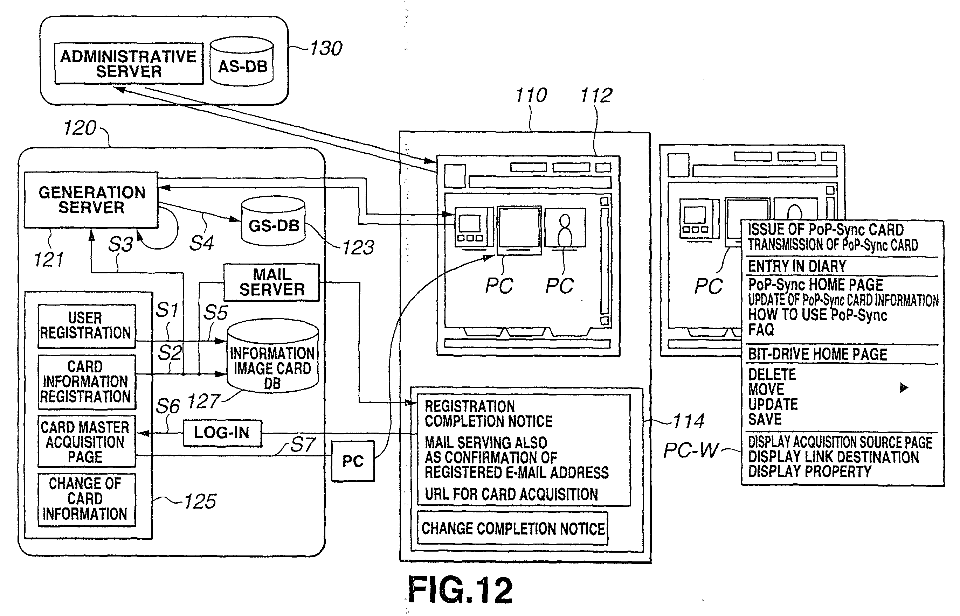

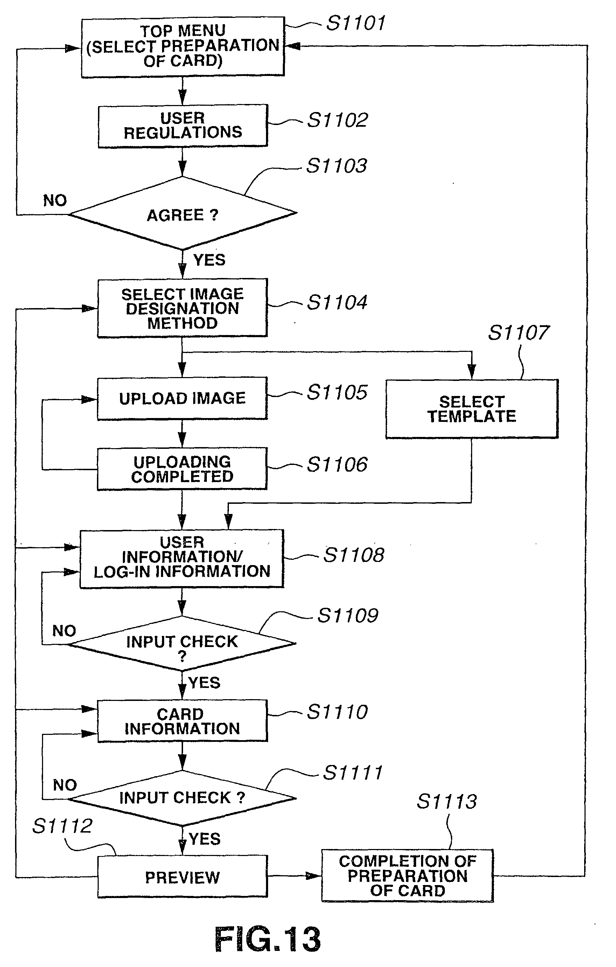

The flow of preparation of the information image card will now be described with reference to the block diagram of Fig.12 and the flowchart of Fig.13. In this case, registration of user information of the information image card and preparation of a new card are carried out. The preparation procedure includes confirmation of use regulations, selection of image information to be attached to an information image card, and input of user information and card information to produce a new information image card.

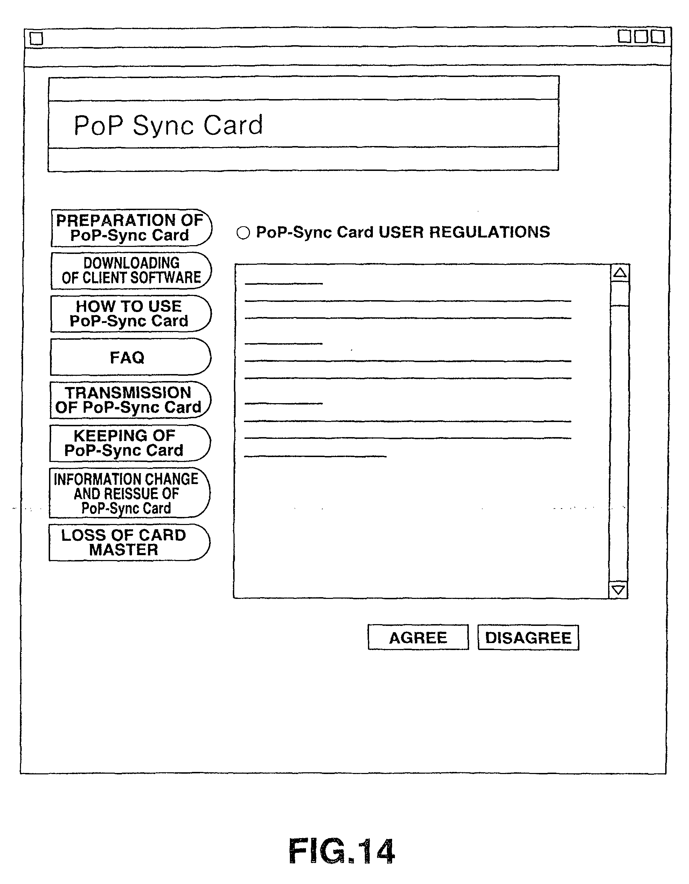

When the preparation of an information image card is selected (S1101) in the top menu shown in Fig.11, use regulations as shown in Fig.14 are displayed (S1102) and agreement with the use regulations is confirmed (S1103).

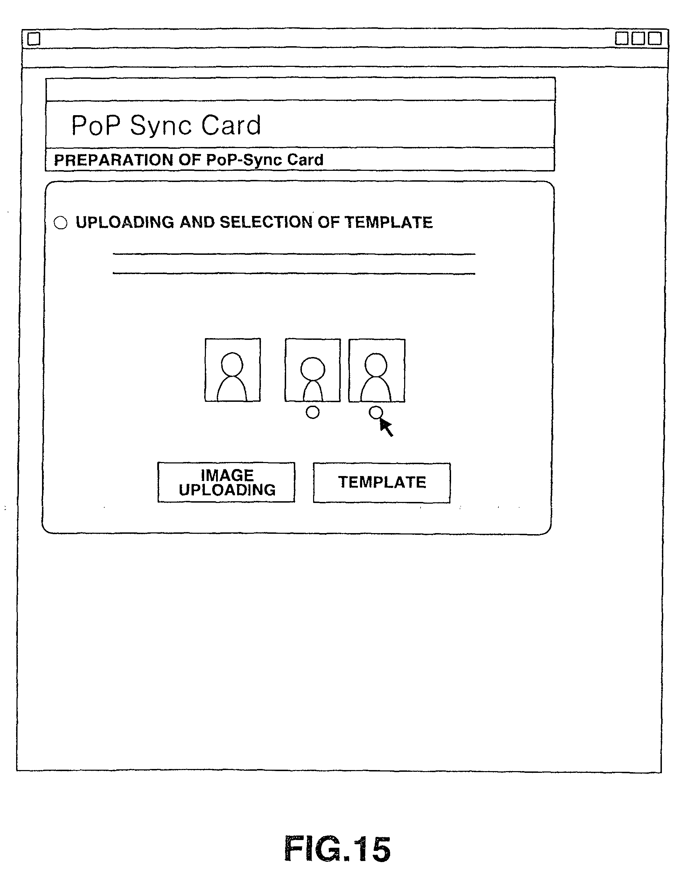

When an "agree" button pressed, the screen shifts to an image designation method selection screen as shown in Fig.15. On the other hand, when a "disagree" button is pressed, the screen shifts to the top menu screen.

After the confirmation of the agreement, uploading of an image file or template is selected on the image designation method selection screen as shown in Fig.15 (S1104). In this case, the user selects uploading and use of an image file to be displayed on the information image card, or use of a prepared image file.

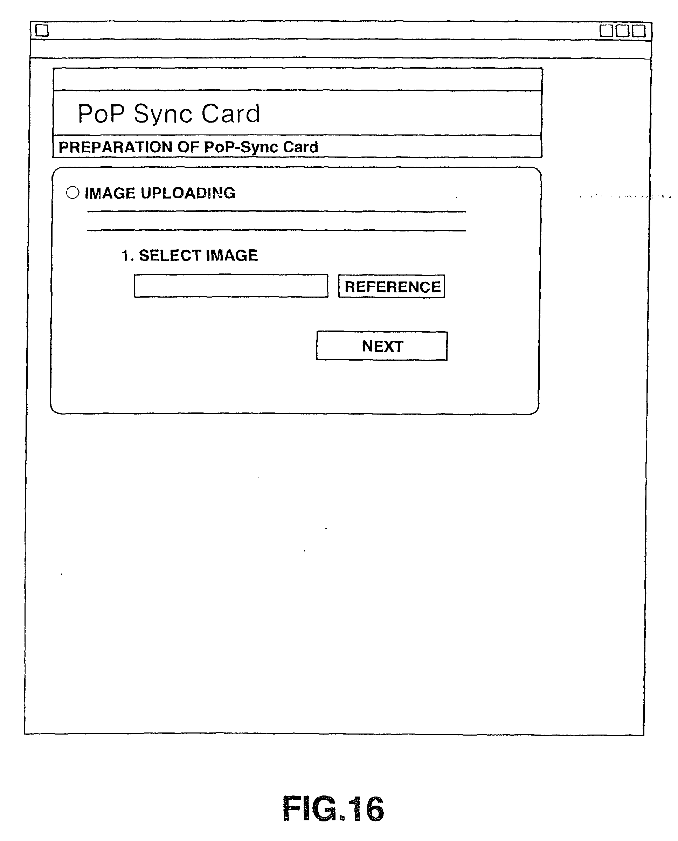

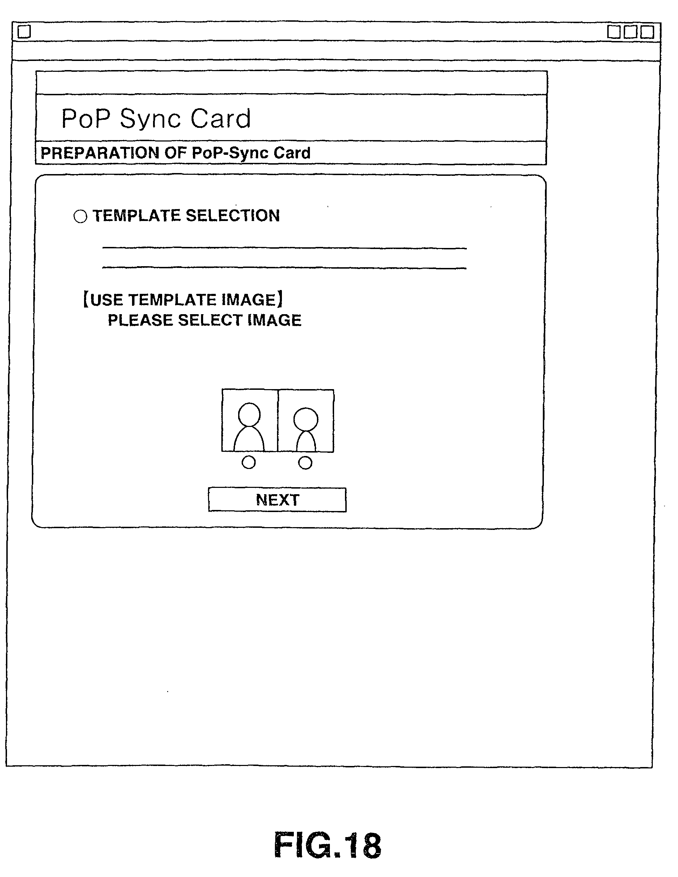

When an "upload image" button is pressed, the screen shifts to an image uploading screen shown in Fig.16. On the other hand, when a "template" button is pressed, the screen shifts to a template selection screen shown in Fig.18 (S1107).

In the case where uploading of an image is selected, the user selects an image file prepared by the user himself/herself from the image uploading screen as shown in Fig.16 and then uploads the image (S1105). When a "reference" button is pressed on the image uploading screen shown in Fig.16, a dialog for selecting an image file to be uploaded is displayed. The initial display directory and the type of a file depend on the browser that is used.

Next, when a "next" button is pressed on the image uploading screen shown in Fig.16, if the selected image file is not correct, an image uploading screen containing an error message is displayed.

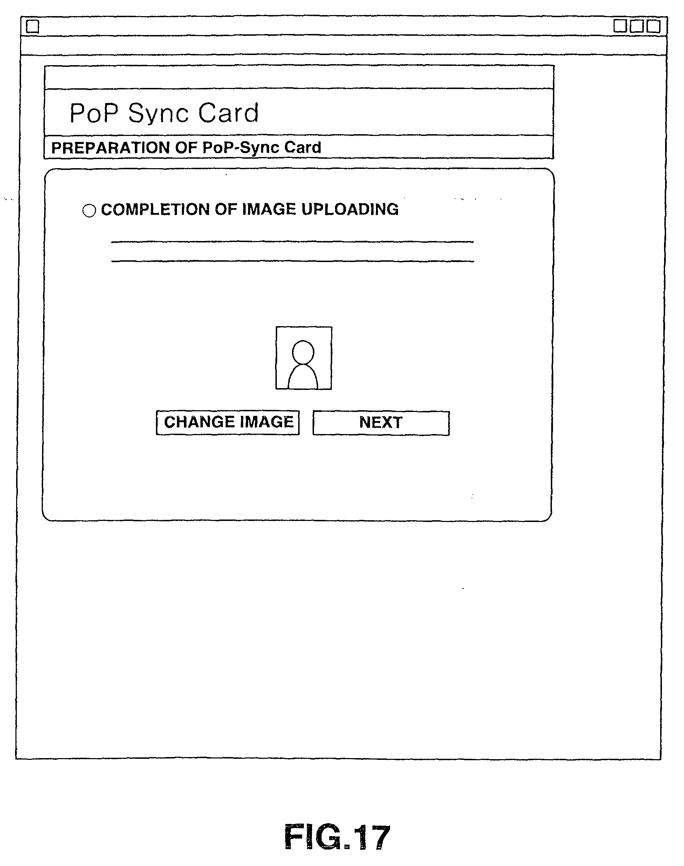

For example, when the image format attachable to the information image card is limited to the JPEG format or when the image size is limited, if an image file which does not meet these conditions is uploaded, an error message is displayed. On the other hand, if the selected image file is correct, an image uploading completion screen as shown in Fig.17 is displayed and the uploaded image file is previewed (S1106). In this case, if the user does not like the image file with reference to the preview of the uploaded image file, a "change image" button is pressed to shift the screen to the image uploading screen shown in Fig.16 and selection of an image file to be uploaded is carried out again.

Meanwhile, in the case where the template is selected, when selection of a template image carried out on a template selection screen as shown in Fig.18, an image information file is prepared on the basis of the template prepared by the system. For example, an image to be displayed on the card is selected from image files of men and women prepared by the system in advance.

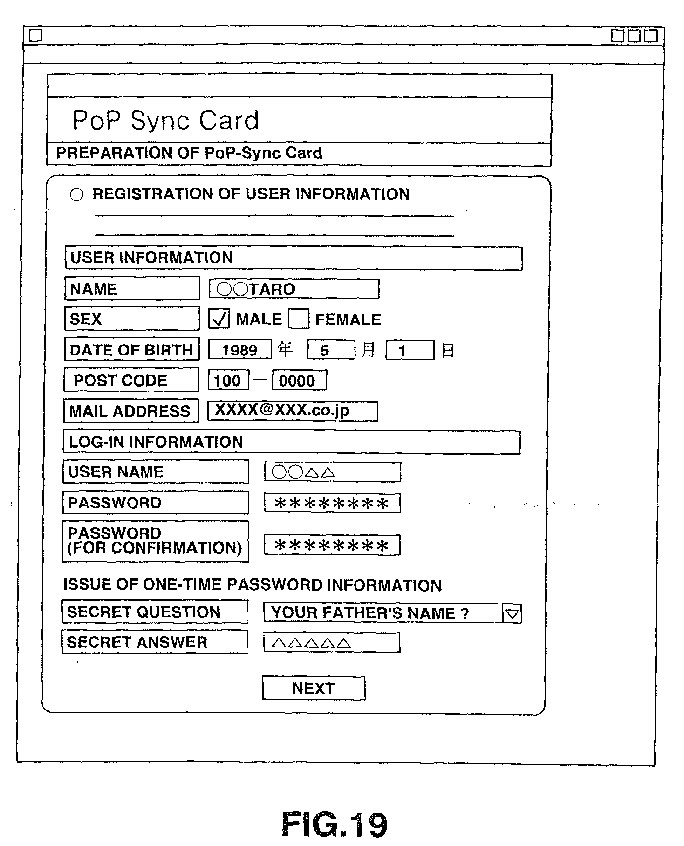

As described above, on completion of the selection of the image information file to be attached to the information image card, user information and log-in information necessary for using the information image card are registered on a user information registration screen as shown in Fig.19 (S1108).

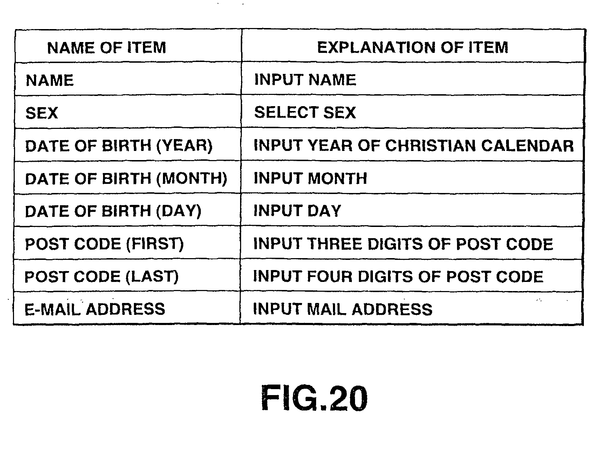

All the items on the user information registration screen are requisite input items (S1 of Fig.12). The user information is information related to an individual person who prepares the information image card or a corporation which prepares the information image card. For example, the user information includes the name, sex, date of birth, e-mail address and the like, as shown in Fig.20. At the same time, as the log-in information, registration of the user name, password, and secret question and answer for issuing a one-time password in case the user might forget the password, is required.

All the user registration information registered by using the user registration screen is registered to the information image card database 127, as a bitcard_user table.

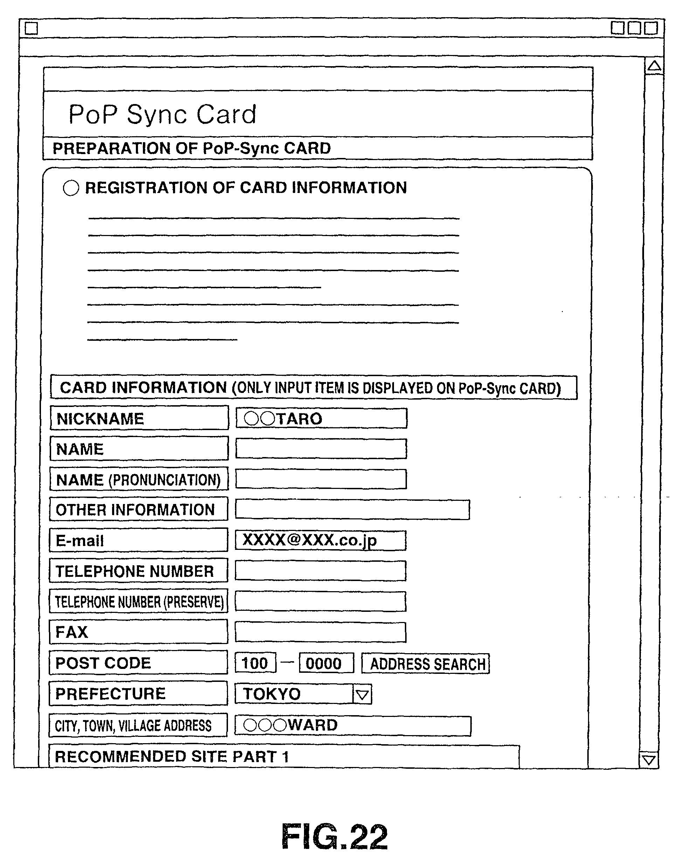

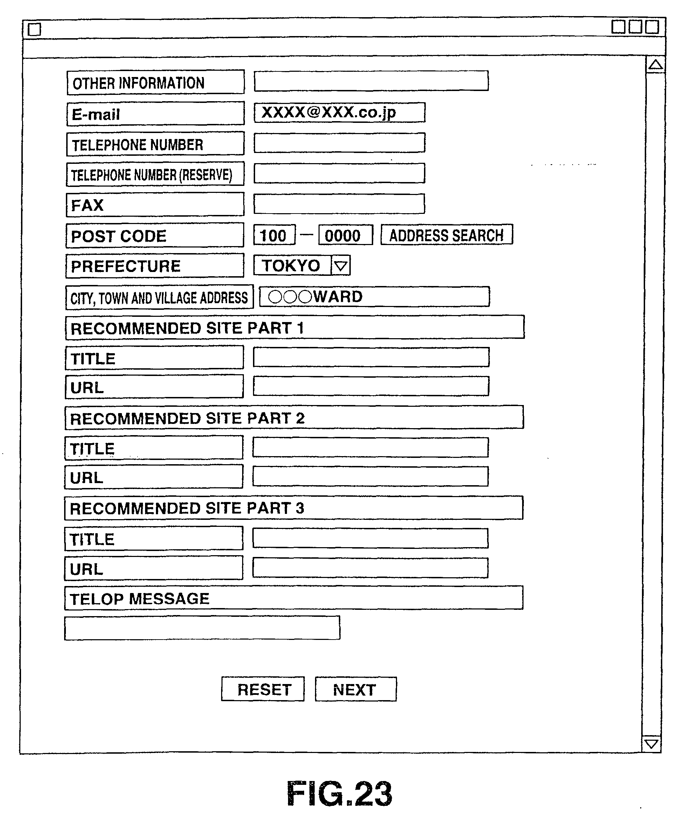

When the input of the user information and the log-in information is thus completed and a "next" button is pressed, input check is carried out with respect to whether the inputted items are correct or not (S1109). When the input check is carried out, if there is an item which is not inputted or if the inputted value is not correct, an input error message box is displayed. If the already registered user name is inputted, a message box indicating that a different user name should be inputted is displayed. In this case, the password item is cleared and it must be inputted again. When all the items are correct, the screen shifts to a card information registration screen shown in Figs.22 and 23.

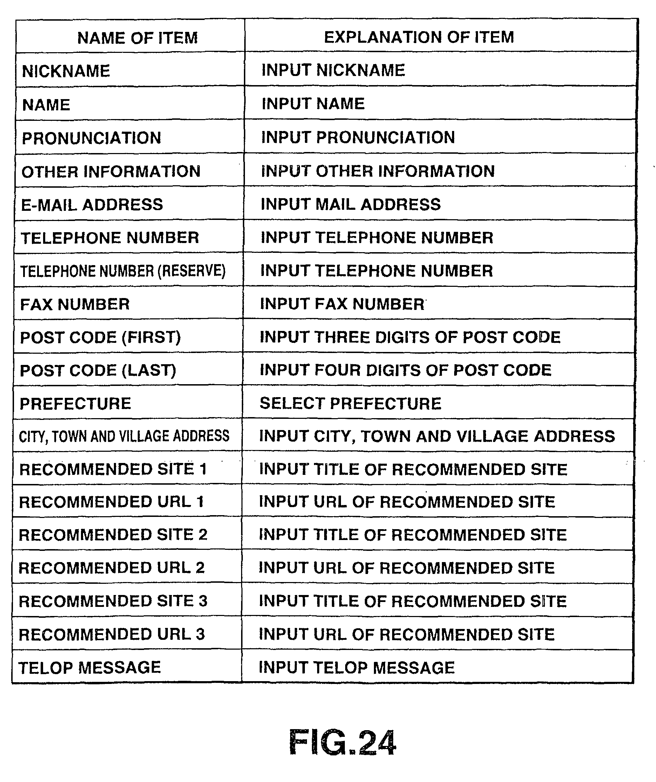

The card information registration screen shown in Figs.22 and 23 is a screen for inputting necessary information for the card information registration processing. On the card information registration screen, the card information appendant to the child card of the information image card to be issued is inputted. The input items include information as shown in the data table of Fig.24, that is, nickname, name, pronunciation and other information, e-mail address, telephone number, facsimile number, address, information related to a recommended site, telop message and the like.

The nickname is a requisite input item and is displayed as the card name of the information image card (child card CC) to be distributed. The other items are optional input items and only the inputted items are displayed as the card information. With respect to some of the input items, for example, the nickname and e-mail address, a value inputted by the user information registration is displayed as a default value.

The card information set by the card information registration processing is registered to the information image card database 127, as a bitcard_cardinfo table in association with the card ID (S2 of Fig.12).

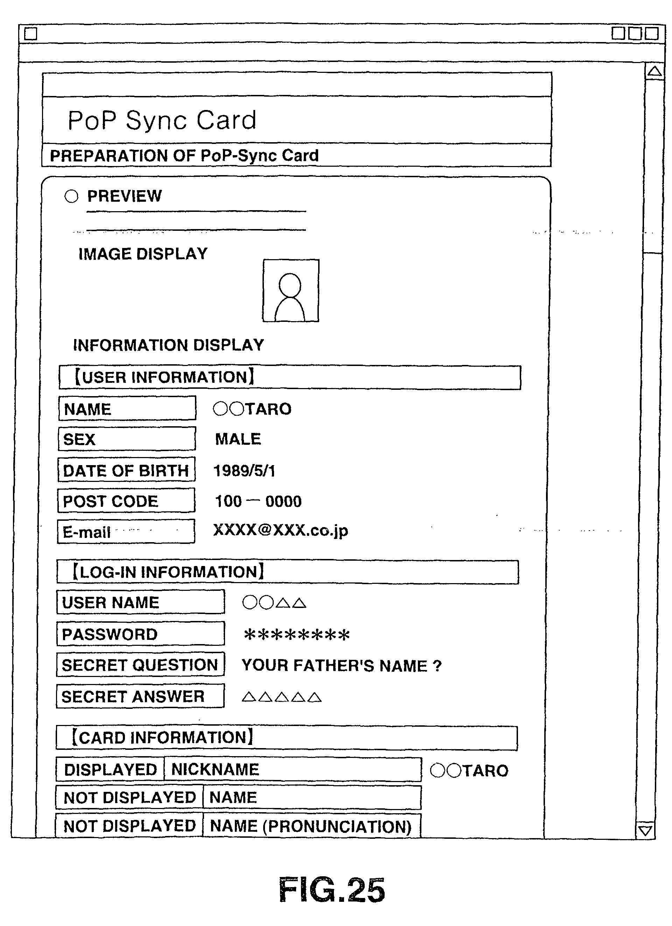

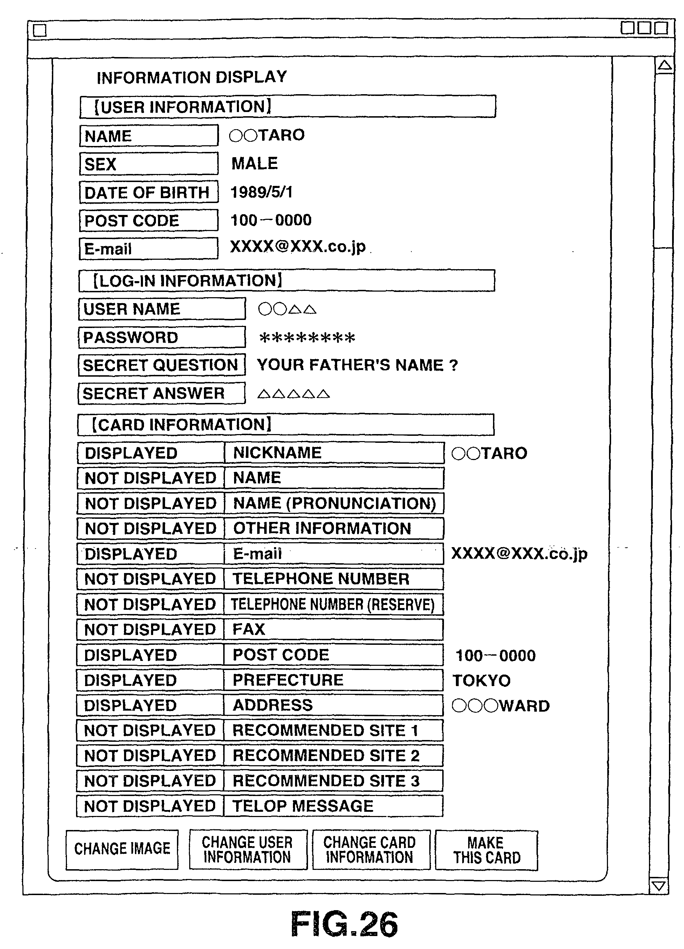

When the predetermined input is thus completed and a "next" button is pressed on the screen of Fig.23, requisite input check of the nickname and input check of the input items are carried out (S1111) and the screen shifts to a preview screen shown in Figs.25 and 26.

On the preview screen shown in Figs.25 and 26, the uploaded image, and the inputted user information, log-in information and card information are previewed (S1112). After the preview is displayed, the processing to prepare the information image card is carried out by the generation server 121 in response to the pressing of a "make this card" button. Specifically, the card information inputted in the above-described card information registration processing is not only registered to the information image card DB 127 but also sent the generation server 121 (S3 of Fig.12). The generation server 121 associates the image file set by the user (or the template image file) with the received card information and thus stores the image file with the card information into the generation server database 123 (S4 of Fig.12).

On the preview screen, the contents of the password are not displayed and are replaced by "*". In the display of the card information, an image of "display" or "no display" of the input items is displayed in accordance with the input status. When a "change image" button is pressed on the preview screen, the screen shifts to the image designation method selection screen shown in Fig.15 while the inputted value is kept it is. When a "change user information" button is pressed on the preview screen, the screen shifts to the user information registration screen shown in Fig. 19 while the inputted value is kept as it is. When a "change card information" button is pressed on the preview screen, the screen shifts to the card information registration screen shown in Figs.22 and 23 while the inputted value is kept as it is.

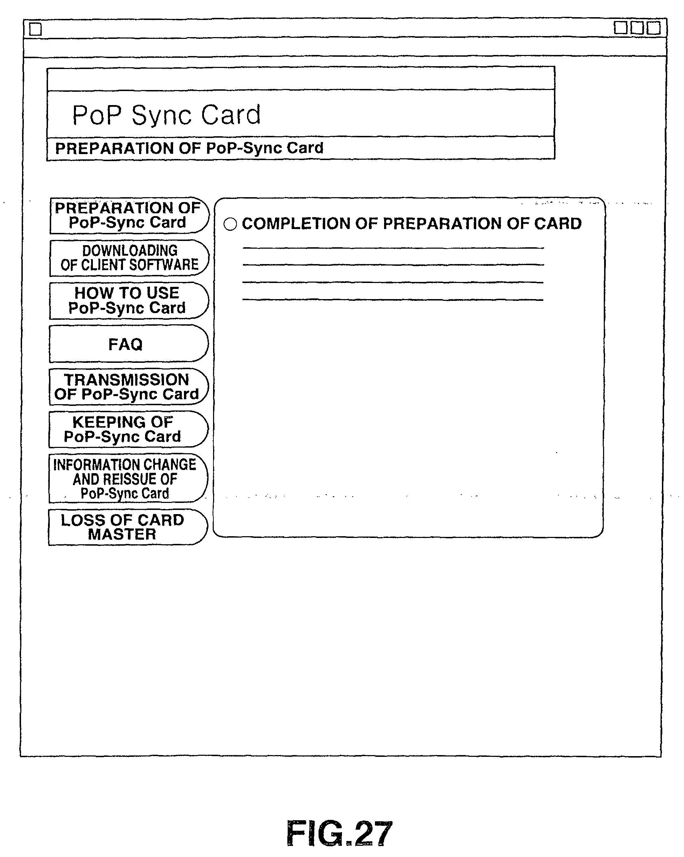

On completion of the preparation of the information image card through the above-described process, a preparation completion screen shown in Fig.27 is displayed and a message indicating the completion of the preparation of the card is displayed. Moreover, a preparation completion notice mail is transmitted to the mail address inputted at the time of registration of the user information (S5 of Fig.12). The system generates HTML for acquiring the card master (parent card PC) and the user is notified of the URL of the generated HTML by the preparation completion notice mail.

When the user acquires the prepared card master (parent card PC) of his/her own, by clicking the URL described in the mail sent from the mail server, a web page corresponding to the URL is displayed by the browser software (S6 of Fig.12). The web page is a page for acquiring the card master and the predetermined card master is placed thereon in advance. By dragging and dropping the card master into the information image folder 112 from the web browser, the card master (parent card) can be displayed within the folder.

The card master PC is not a card on which the image data selected by the user as an icon image is displayed, but a card on which characters of "PoP-Sync" are displayed as a symbolic image. In short, it is not an information image card (child card) to be distributed to another client. In order to see what kind of information image card (child card) is prepared by the card registration processing, the user carries out the next processing to issue the child card. This processing is not requisite. The distribution of the information image card (child card) is possible without carrying out the child card issue processing.

To have the information image card (child card) issued, first, an operation window PC-W must be displayed by making right clicking on the card master (parent card) displayed in the information image folder 112. In the operation window PC-W, a menu containing "issue of PoP-Sync card," "transmission of PoP-Sync card," "entry in diary," "update of PoP-Sync card information" and the like is displayed, as a plurality of functions to be realized by the information management system of the present embodiment. The function of "issue of PoP-Sync card" is a function to request the information image card management server 120 to issue a child card corresponding to the card master displayed in the information image folder 112. The function of "transmission of PoP-Sync card" is a function to transmit the child card corresponding to the card master displayed in the information image folder 112 to a plurality of recipients designated by the user as the sender, as will be later described in detail. The function of "entry in diary" is a function to prepare and/or update pages of the diary of the owner (producer) of the card master displayed in the information image folder 112, as will be later described in detail. The function of "update of PoP-Sync card information" is a function to update the image file registered as the icon image of the information image card, the user information registered as the bitcard_user table, and the card information registered as the bitcard_cardinfo table when the card master displayed in the information image folder 112 is prepared, as will be later described in detail.

For the card master owner who prepared the card master to acquire the information image card (child card) of his/her own preparation, the "issue of PoP-Sync card" function is selected from the above-described menu. When the "issue of PoP-Sync card" function is selected by the user, the client software in the client 110 requests the generation server 121 to distribute the information image card (child card). The generation server 121 refers to the card ID of the card master displayed in the information image folder 112 and receives the related information for constituting the information image card (child card) held in association with the card ID, from the generation server database 123. For example, the information read out from the generation server database 123 includes image data representing the information image card (child card), and card information registered to the generation server database 123 as substantially the same information as the bitcard_cardinfo table.

The generation server 121 generates an image icon of the information image card on the basis of the image data received from the generation server database 123, and attaches the card information received from the generation server database 123 as additional information of the information image card, thus preparing the information image card (child card). The card information attached to the image data as the additional information is the information displayed by making right clicking on the information image card (child card) displayed in the information image folder 112. As the generation server 121 sends the generated information image card (child card) by push distribution to the client software in the client 110, the information image card (child card) is displayed in the information image folder 112. It is not possible to use the function added to this information image card (child card) only by pasting it to the desktop of the client 110 or by displaying the icon of the information image card by the web browser. Only when this information image card is displayed in the information image folder started by the client software, the function added to the information image card is active.

### 4.3. Downloading of client software for information image

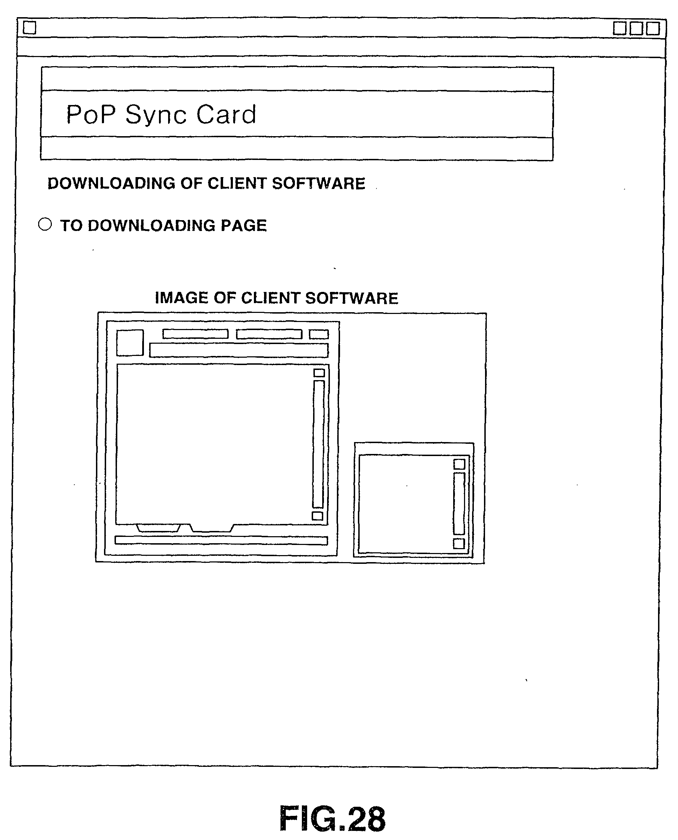

As is described already, the information image card is made usable by introducing the client software for information image (information image folder) to the client. From the top page of the information image web shown in Fig.11, a user who does not own the client software for information image can display the screen which leads to the site for downloading the client software for information image, in a separate window, as shown in Fig.28. In the downloading page of Fig.28, a display image of the client software is displayed, too.

### 4.4. Exemplary display of information image card

As is described already, the information image card is constituted by the parent card PC held at the client of the issuer and the child card CC to be distributed via the network. Hereinafter, exemplary displays of the parent card PC and the child card CC will be described with reference to Figs.29 and 30.

### 4.4.1. Exemplary display of parent card (card master) PC

Fig.29 shows an exemplary display of the parent card PC displayed in the information image folder. When the information image card is generated in accordance with the information image card generation flow shown in Figs.12 and 13, the user accesses the URL of a designated card master acquisition page, then acquires the parent card PC, and drags and drops the parent card PC into the information image folder 112, thus generating the parent card PC.

The parent card PC is the card master for managing the child card CC, which will be described later. In the information image folder 112, too, the parent card PC is displayed as a symbolic image so as to be distinguishable from the child card CC. The operator can display a parent card operation window PC-W by making right clicking on the parent card PC. By selecting a desired item from a menu containing "issue of PoP-Sync card," "transmission of PoP-Sync card," "update of PoP-Sync card information," and "entry in diary" displayed in the parent card operation window PC-W, the operator can carry out the basic operation of the information image card corresponding to the parent card PC.

### 4.4.2. Exemplary display of child card (distributed card) CC

Fig.30 shows an exemplary display of the child card CC displayed in the information image folder. As is described already, the child card CC is a cyber business card. In the information image folder 112, an image which can identify the owner of the information image card, for example, a photograph of the face of the user at the distribution source, is displayed. The operator can display a child card operation window CC-W by making right clicking on the child card CC. In the child card operation window CC-W, not only the personal information of the client who owns the information image card is registered such as the name, telephone number, address and e-mail address, but also the URL information of a site recommended by the owner of the information image card is registered with a menu title of "recommended site," or the URL information of a diary prepared by the owner of the child card is registered with a menu title of "read diary." Such information is not identical to the user information registered as the bitcard_user table and the card information registered as the bitcard_cardinfo table, as is described already. However, such information is the user information and the card information which are extracted from the bitcard_user table and the bitcard_cardinfo table as necessary data for the preparation of the information image card and registered to the generation server database 123.

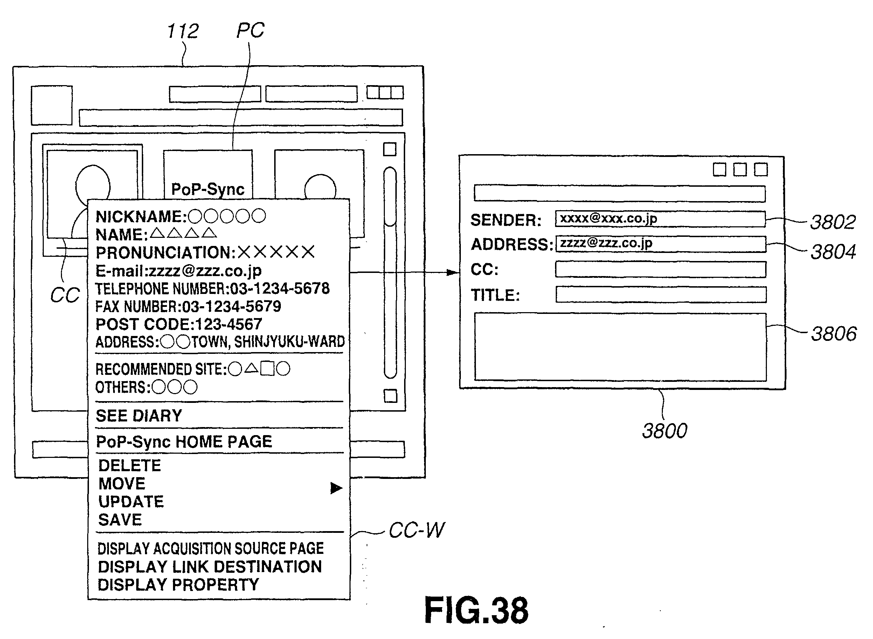

As will be described later with reference to Fig.38, the child card CC also has a function as an e-mail address book. Specifically, if the operator makes right clicking on the e-mail address displayed in the child card operation window CC-W, the mailer incorporated in the client automatically starts in the state where the e-mail addresses of the transmission source and the transmission destination are inputted. Therefore, the operator can transmit an electronic mail to the owner of the child card simply by inputting a text and a title.

### 4.5. Procedure for transmitting information image card (child card CC)

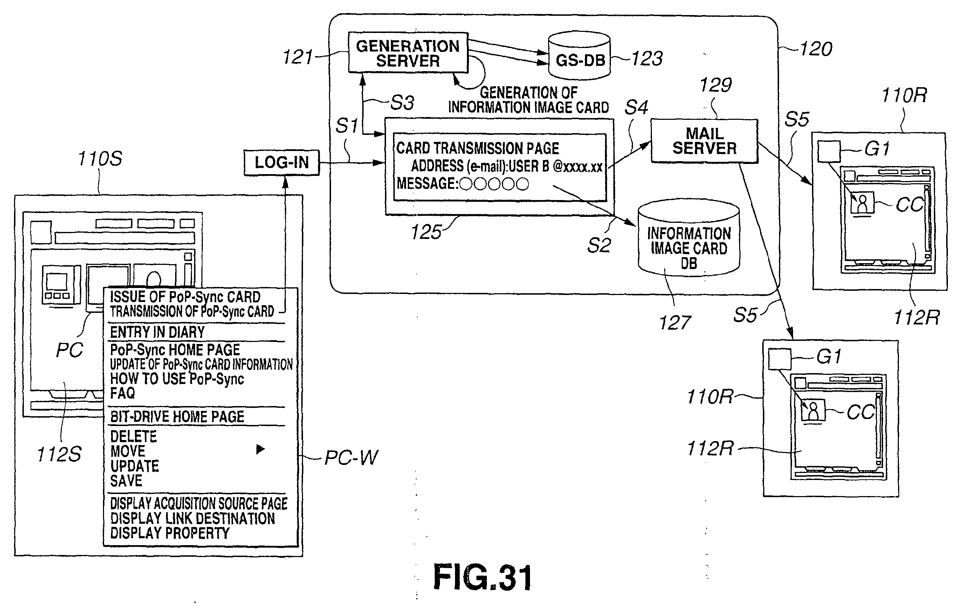

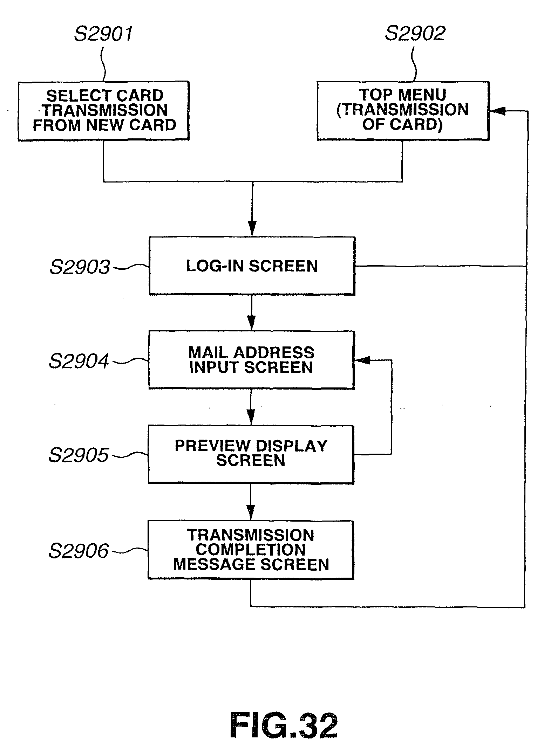

A method for transmitting/receiving the information image card will now be described with reference to the flowcharts of Figs.31 and 32.

In the information management system according to the present embodiment, transmission of an information image card means that the owner of the parent card PC transmits the child card CC as an attachment file of an electronic mail to the mail address of a third party. Reception of the information image card means that the child card CC is received as an attachment file of an electronic mail from the owner of the parent card PC.

The transmission of the child card CC of the information image card can be carried out by selecting "transmission of card" for transmitting the child card CC from the operation window PC-W displayed by making right clicking on the parent card PC displayed within the information image folder 112S, and then logging in to the information image card management server 120 (S2901), as shown in Figs.30 and 31. Alternatively, the transmission of the child card CC can be carried out by selecting transmission of the card from the top page of the information image card web shown in Fig.11 (S2902).

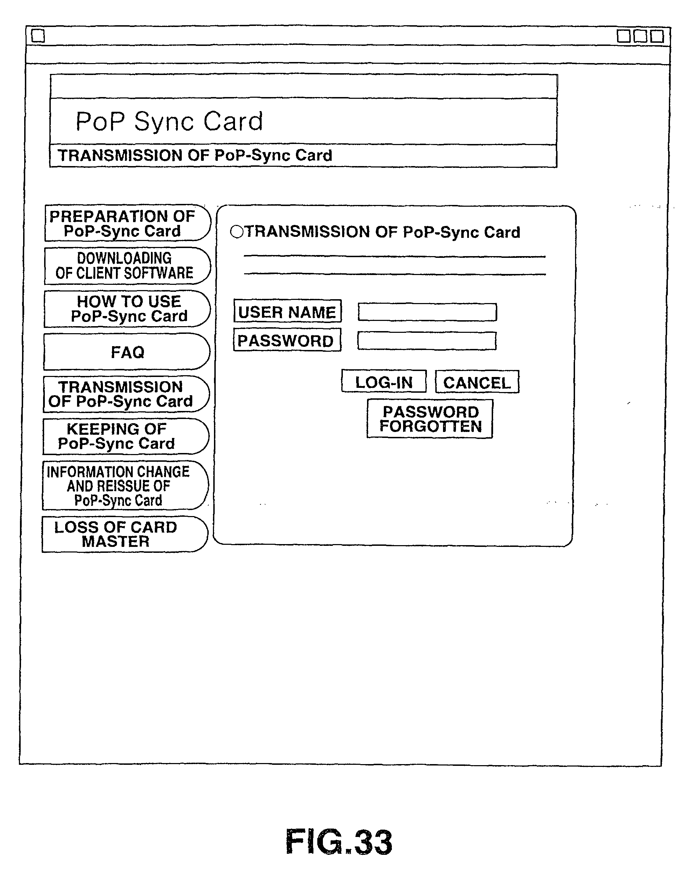

As the owner of the information image card (parent card PC) selects a menu item of "transmission of PoP-Sync card" representing transmission of the card from the operation window PC-W, the browser software of the computer of the client 110S is started and a log-in screen as shown in Fig.33 is displayed (S2903). This log-in screen is a web screen provided from the web server 125 for management of the information image card. When the sender of the information image card inputs the user account and the password on the log-in screen, the web server 125 for management of the information image card authenticates the sender with reference to the bitcard_user table registered to the information image card DB 127 (S1 of Fig.31).

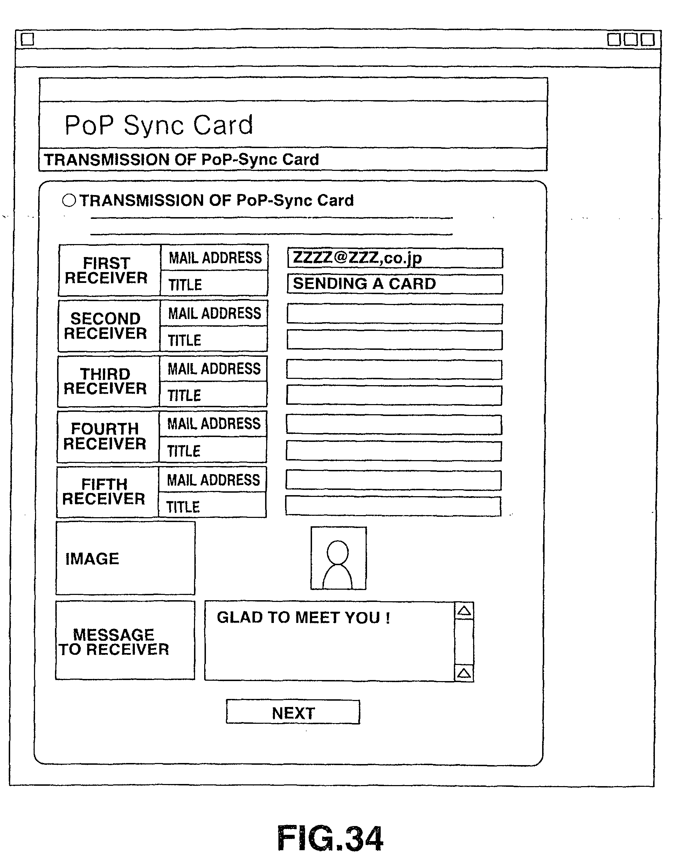

On completion of the authentication processing by the web server 125 for management of the information image card, the web server 125 for management of the information image card causes the browser of the computer of the client 110S to display a mail address input screen as shown in Fig.34 (S2904). When the user presses a "cancel" button, the screen shifts to the top menu screen shown in Fig.11. On the log-in screen shown in Fig.33, a "password forgotten" button is prepared, too. If the operator has forgotten the password and presses the "password forgotten" button, the screen shifts to a one-time password input screen (not shown) which is registered in advance. Log-in is made possible by answering a question which is registered in advance.

On the mail address input screen shown in Fig.34, the mail address of the transmission destination and a message to the counterpart are inputted. In the example shown in Fig.34, mail addresses and titles for a plurality of destinations, for example, five persons, can be inputted simultaneously. However, in the example shown in Fig.34, messages to the transmission destinations contain the same text. Of course, it is also possible to send messages of different texts to a plurality of transmission destinations. As for input items, the mail address and the title for the first destination are requisite input items. The other input items are optional.

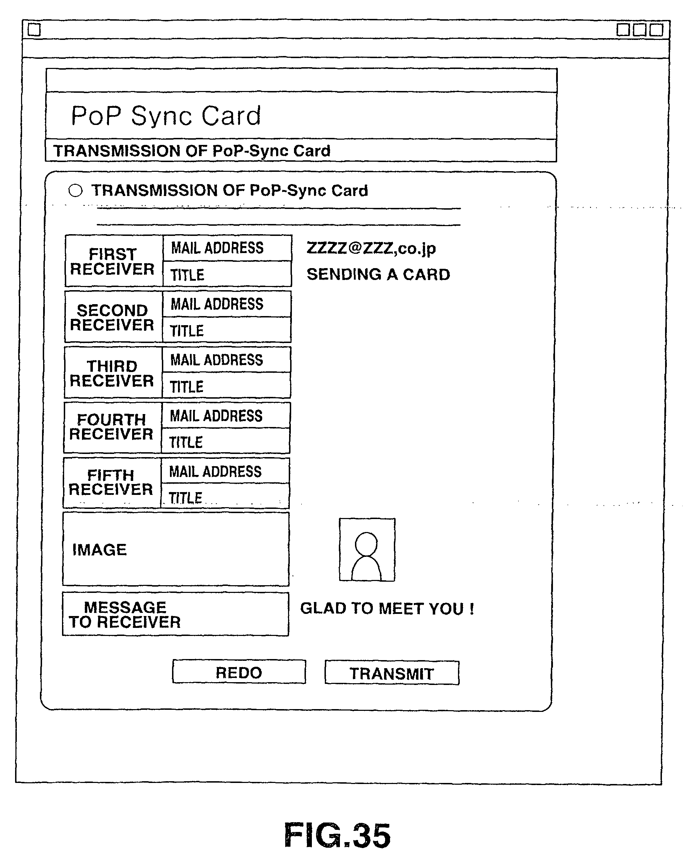

When a "next" button is pressed on the mail address input screen, the information image card web server 125 checks the input items an displays a preview screen as shown in Fig.35. On the preview screen, preview display of the inputted mail address, text and attached image can be carried out (S2905).

When a "send" button is pressed after the input contents are confirmed on the preview screen shown in Fig.35, the information image card web server 125 starts preparation for mail transmission to the designated destination, using the contents displayed in the preview. First, the information image card web server 125 sends an instruction to prepare a child card CC to the generation server 121 (S3 of Fig.31). The generation server 121 prepares a static image file (for example, a JPEG image file) to be the base for the child card CC, by using the image data registered to the database as the information associated with the parent card. The information image card web server 125 receives the static image file prepared by the generation server 121 and provides the file to the mail server 129. At the same time, the information image card web server 125 supplies a command to prepare an electronic mail of the contents confirmed on the preview screen, to the mail server 129 (S4 of Fig.31). In accordance with the command from the information image card web server 125, the mail server 129 attaches the static image file prepared by the generation server 121 to the electronic mail and distributes this electronic mail to the designated destination. The mail transmission processing can be carried out by using a predetermined CGI (common gateway interface) program.

If the user wants to change the input contents on the preview screen, a "redo" button is pressed to shift to the mail address input screen while keeping the inputted information. Then, necessary information can be inputted again.

After sending a mail transmission command to the mail server 129, the information image card web server 125 prepares a bitcard_sendcard table and registers it to the information image card database 127. This bitcard_sendcard table is a table for registering the mail address of the destination to which the information image card is sent and the date and time of transmission, in association with the user ID. For example, if the user sends his/her information image card to 10 clients, the mail addresses of the 10 clients and the dates and times of transmission are registered to the bitcard_sendcard table. That is, the information stored in the bitcard_sendcard table is information indicating the distribution history of the information image card. The information image card web server 125 can learn when and to whom each information image card was sent, by referring to the bitcard_sendcard table.

### 4.6. Procedure for receiving information image card (child card CC)

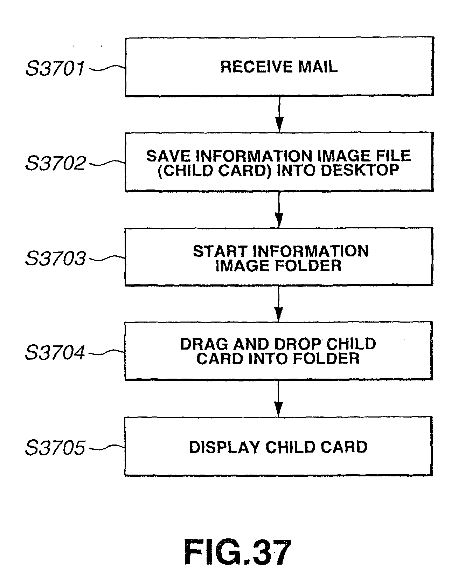

The reception procedure by the information image management system according to the present embodiment will now be described with reference to Figs.31 and 37.

First, a recipient client 110 receives an electronic mail to which a static image file as the base of a child card is attached, from a sender client 110 (S3701). As shown in Fig.31, the recipient client 110 pastes an icon GI for generating the attached child card to the desktop (S3702). Then, to make the information image card usable at the client 110, the client software for information image is started and an information image folder 112R is displayed (S3703). If the client software for information image is not incorporated in the recipient client 110, the information image client software administrative server 130 can be accessed to download the necessary client software for information image.

Next, as shown in Fig.31, as the child card generation icon GI pasted to the desktop is dragged and dropped into the information image folder 112R displayed on the display device of the recipient client 110 (S3704), the child card generation icon GI automatically unfolds and the child card CC is displayed (S3705).

By making right clicking on the child card CC displayed in the information image folder, it is possible to display the operation window CC-W as shown in Fig.30 and confirm personal information related to the child card CC or send an electronic mail to the sender of the child card CC, or to browse the diary held by the sender of the child card CC, or to enjoy the services available in the information management system according to the present embodiment.

### 4.7. Address book function of information image card

The address book function of the information image card according to the present embodiment will now be described with reference to Fig.38.

As is described already, the child card CC of the information image card also has the function of an e-mail address book. As shown in Fig.38, when operator wants to send an electronic mail to the child card CC displayed in the information image folder 112, the operator makes right clicking on the child card CC to display the operation window CC-W. Then, by clicking an e-mail address displayed in the operation window CC-W, the operator can cause a mailer 3800 such as Outlook Express which is linked in advance to automatically start.

In the information management system according to the present embodiment, the e-mail address of the sender of the child card CC is inserted in a recipient address space of the mailer 3800, which has automatically started, and the e-mail address of the recipient of the child card CC is inserted in a sender address space. Therefore, the operator need not input the e-mail addresses into the sender address space and the recipient address space of the mailer. In this manner, simply by making right clicking on the child card CC to display the operation window CC-W and clicking an e-mail address described in the operation window CC-W, the operator can start the mailer in which necessary items are described. Then, by inputting necessary texts and title into an e-mail text space 3806, the operator can complete and send the electronic mail.

Thus, according to the information management system according to the present embodiment, the child card CC displayed in the information image folder can be used similarly to an electronic address book and the e-mail sending procedure can be simplified. Moreover, input errors of e-mail addresses can be avoided.

### 4.8. Information update of information image card

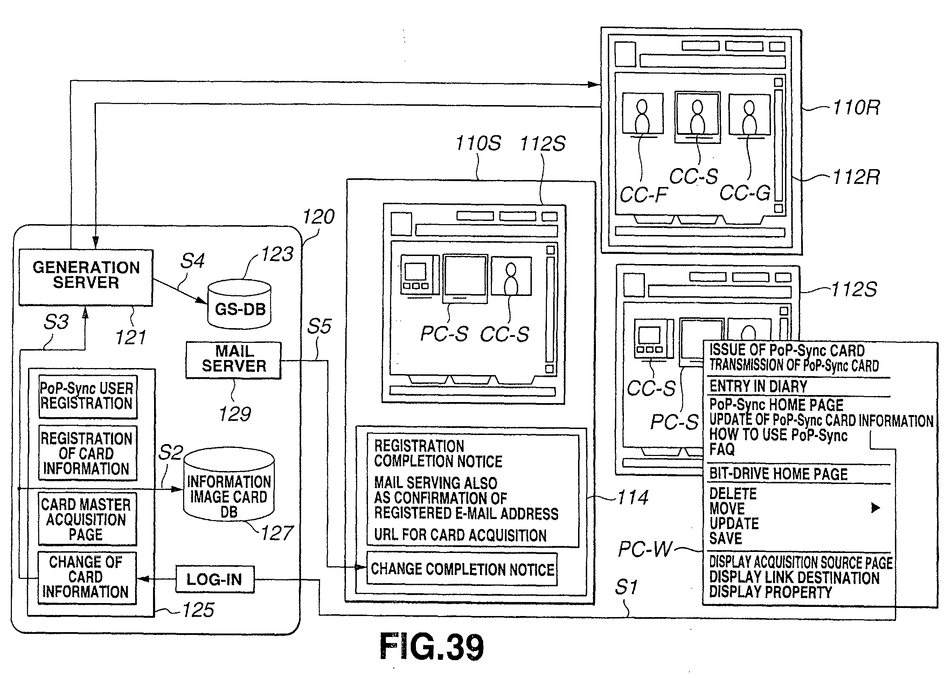

The procedure for updating information contained in the information image card in the information management system according to the present embodiment will now be described with reference to Figs.39 to 49.

### 4.8.1. Outline of information update procedure for information image card

First, the outline of the information update procedure for the information image card will be described with reference to Fig.39. The update of information contained in the information image card is carried out by using the parent card PC in the information image folder 112. Right clicking is made on the parent card PC to display the operation window PC-W and an item of "update of PoP-Sync card information" indicating the update of the information image card is selected from the operation menu. Then, the web browser in the client 110S is started and log-in is made to the information image card web server 125 (S1 of Fig.39). The information image card web server 125 provides the web browser of the client 110S with a card information updating page or a user information updating page, which will be described later. When update information related to the card information or the user information is inputted to the information image web server 125 from the client 110S via the web browser, the update information is sent to the information image card database 127 and the user information registered as the bitcard_user table or the card information registered as the bitcard_cardinfo table is updated (S2 of Fig.39). The update information is also sent to the generation server 121 (S3 of Fig.39). Since the related information (information accessed by right clicking) related to the information image card is also stored in the generation server database 123, when the user information or the card information is updated, the generation server 121 updates the related information saved in the generation server database 123 (S4 of Fig.39). Moreover, since the image data expressing the information image card is stored in the generation server database 123, when the image data is replaced, the generation server 121 replaces the image data saved in the generation server database 123 with new image data.

When the contents related to the information image card stored in the databases 127 and 123 are updated, an update completion notice is sent from the mail server 129 to the client 110S who requested the update (S5 of Fig.39).

### 4.8.2. Change of card information

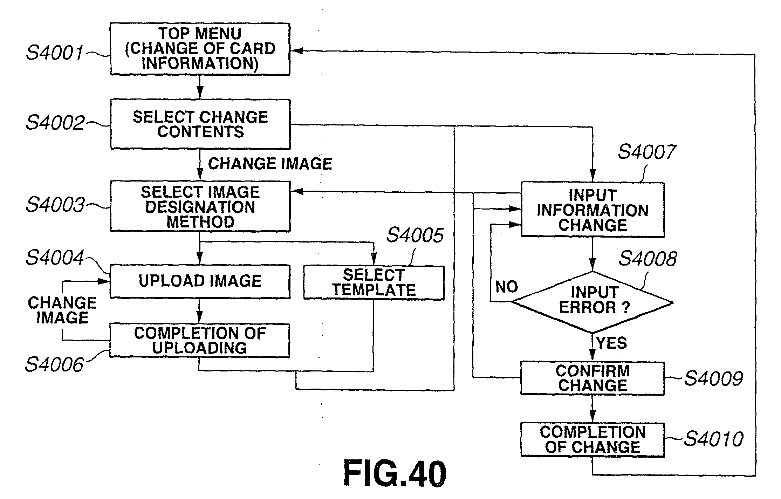

The details of the procedure for changing the card information of the information image card will now be described with reference to Figs.40 to 45.

First, change of card information is selected from the operation window PC-W displayed by making right clicking on the parent card PC. Alternatively, change of card information is selected from the top page of the information image card web. Then, the screen displayed on the display device of the client 110 shifts to a log-in screen (S4001).

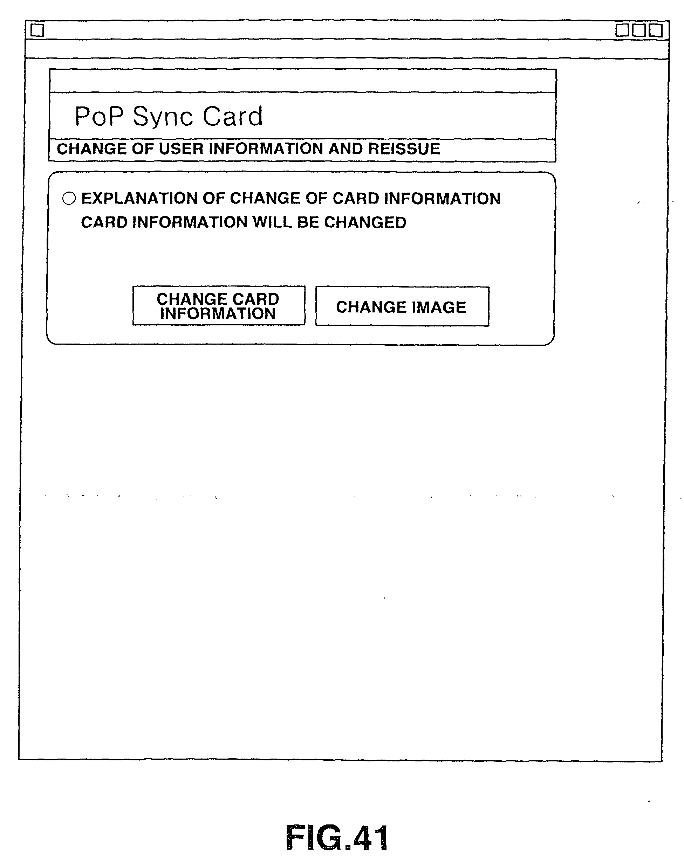

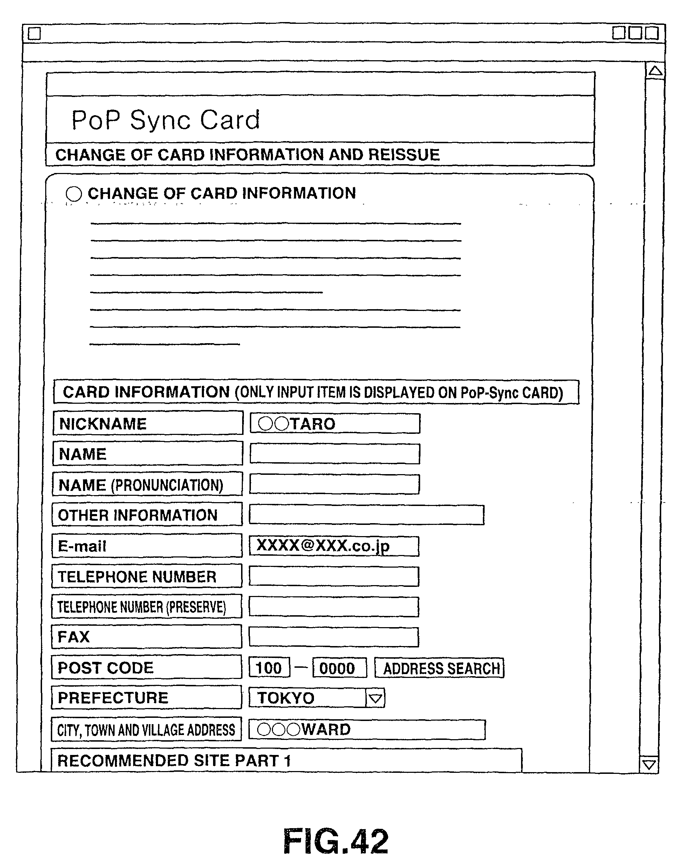

On the log-in screen, authentication of the user name and the password is carried out. As a "log-in" button is pressed on the log-in screen, user authentication is carried out with respect to the inputted user name and password. If the authentication is correctly carried out, the screen shifts to a change contents selection screen shown in Fig.42. If a "cancel" button is pressed, the screen shifts to the top menu screen. If a "password forgotten" button is pressed, the screen shifts to a one-time password input screen and the issue of a one-time password is tried on the basis of the contents registered in advance. If the one-time password is authenticated, the screen shifts to the change contents selection screen shown in Fig.41. On the change contents selection screen shown in Fig.41, the operator can select change of an image file or change of card information (S4002).

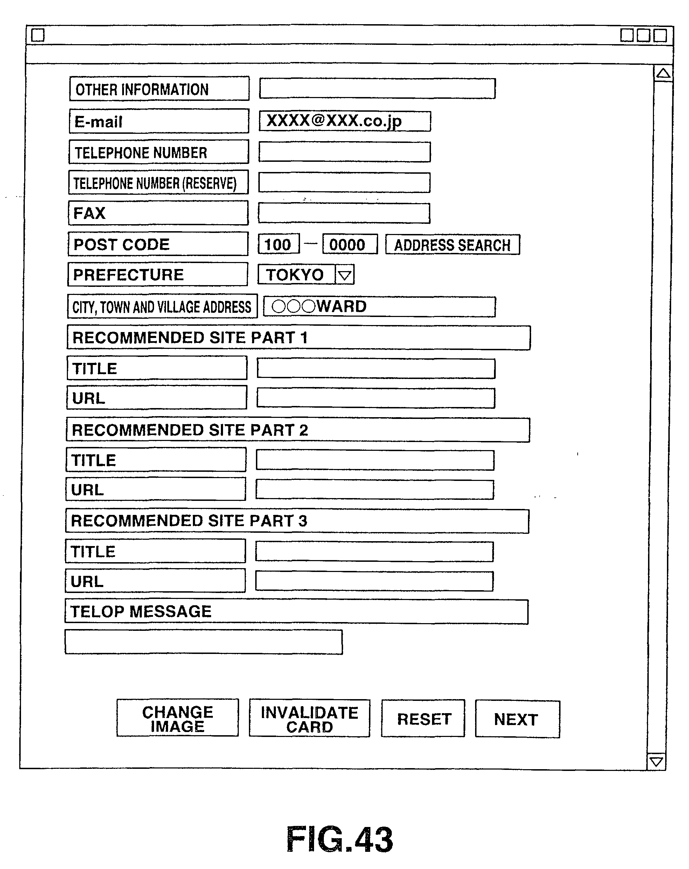

If a "change card information" button is pressed on the change contents selection screen shown in Fig.41, the screen shifts to a change input screen as shown in Figs.42 and 43 (S4007). If a "change image" button is pressed, the screen shifts to an image designation method selection screen. The image designation method selection screen is substantially equivalent to the image designation method selection screen of Fig.15 and therefore will not be described further in detail.

On the image designation method selection screen as shown in Fig.15, uploading of an image file or selection of template is carried out (S4003). In this case, the user selects uploading and use of an image file to be displayed on the information image card or use of a prepared image file.

If an "image uploading" button is pressed, the screen shifts to an image uploading screen which is substantially equivalent to the image uploading screen shown in Fig.16 (S4004). After the completion of the uploading (S4006) or after the completion of the template selection, the screen shifts to the change input screen shown in Figs.42 and 43 (S4007).

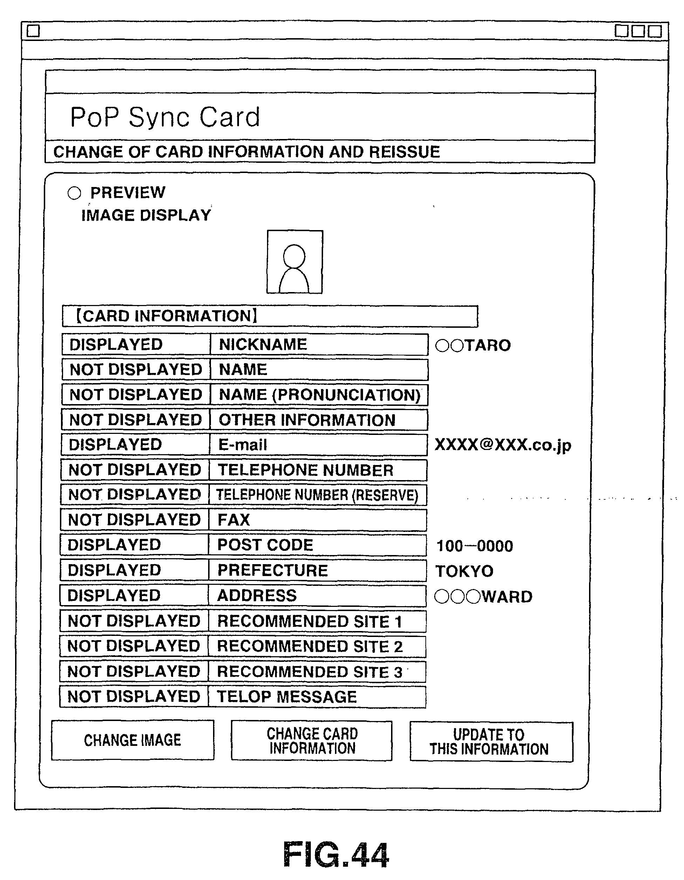

On this change input screen, the operator inputs card information to be changed. As an initial display, the value stored in the card information table 123 is displayed. If a "next" button is pressed on the screen shown in Fig.43 after the change of information is completed, requisite input check of nickname and the like, and input check of input items are carried out (S4008). After the completion of the check, the screen shifts to a change confirmation screen shown in Fig.44 (S4009). Then, the operator confirms whether to update the card information with the previewed contents or not.

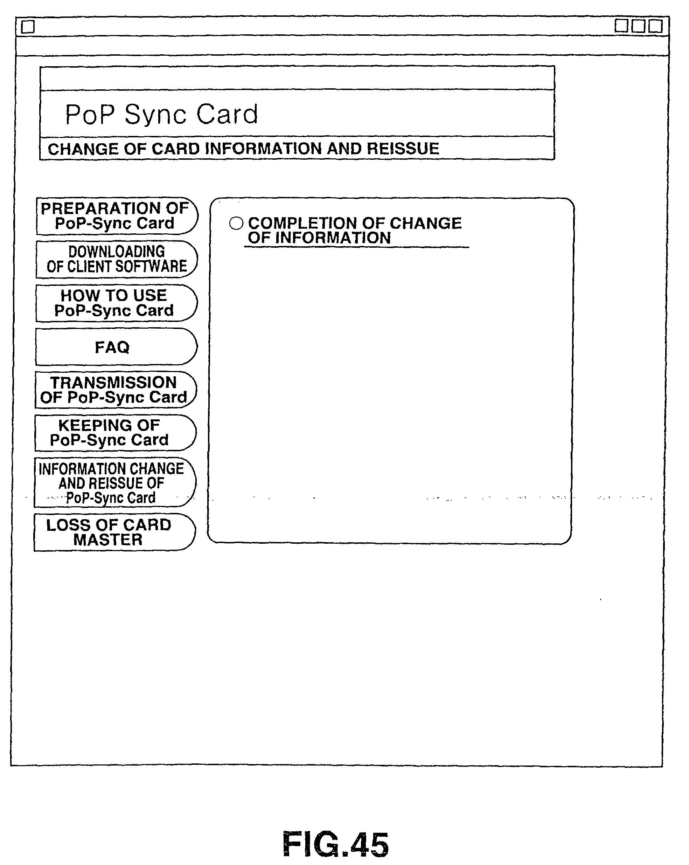

When the update of the card information is thus completed and if the operator further wants to change the information file contained in the information image, the operator presses the "change image" button. Then, the screen shifts to the image designation method selection screen while the inputted value is held. If the operator wants to continue updating the card information, the operator presses the "change card information" button. Then, the screen shifts to the change input screen while the inputted value is held. When updating the card information with the previewed contents, if the operator presses a "update to this information" button, a message indicating that the card information was updated is displayed on a change completion screen shown in Fig.45 and a change completion notice is sent to the operator's mail address registered as the user information.

The change of the card information of the parent card is thus completed. The changed contents are reflected on the card information of the child card derived from the parent card having the changed information, by the information image card management server, thus carrying out simultaneous change of the information.

### 4.8.3. Change of user information

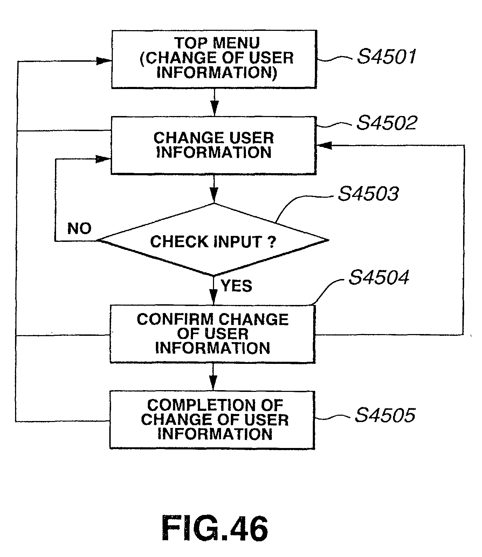

The procedure for changing the user information of the information image card in the information management method according to the present embodiment will now be described in detail with reference to Figs.46 to 50.

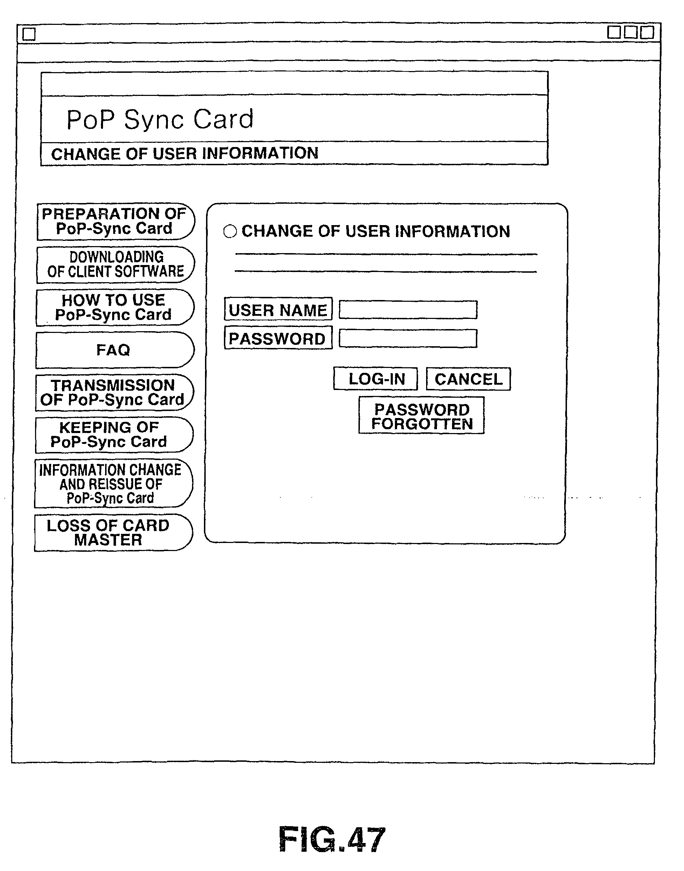

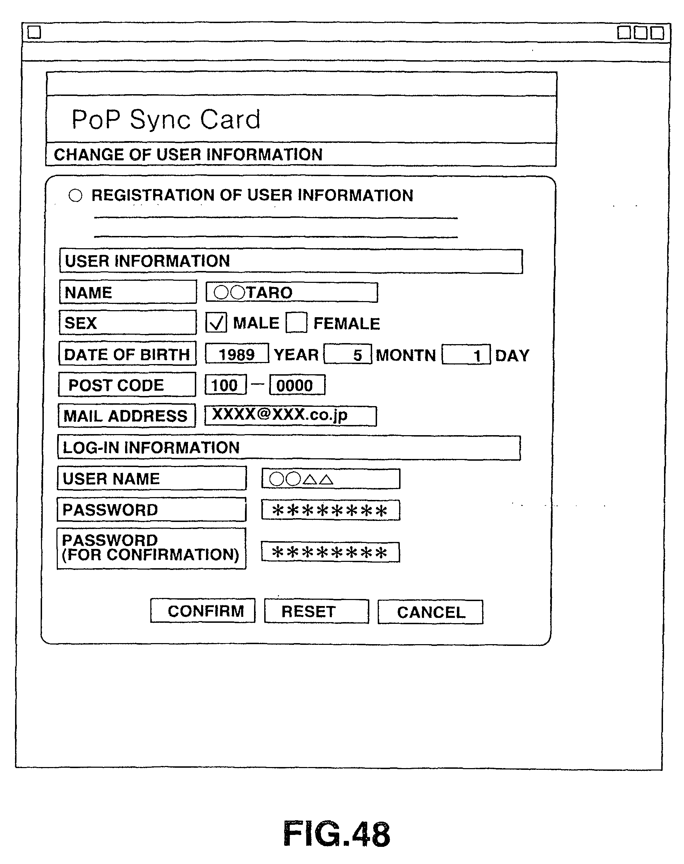

Similar to the change of the card information, as change of user information is first selected from the operation window PC-W displayed by right clicking on the parent card PC or from the top page of the information image card web, the screen shifts to a log-in screen shown in Fig.47 (S4501). On the log-in screen, authentication with the user name and the password is carried out. As a "log-in" button is pressed on the log-in screen, user authentication is carried out with respect to the inputted user name and password. If the authentication is correctly carried out, the screen shifts to a user information change screen shown in Fig.48. If a "cancel" button is pressed, the screen shifts to the top menu screen. If a "password forgotten" button is pressed, the screen shifts to a one-time password input screen and the issue of a one-time password is tried on the basis of the contents registered in advance. If the one-time password is authenticated, the screen shifts to the user information change screen shown in Fig.48 (S4502).

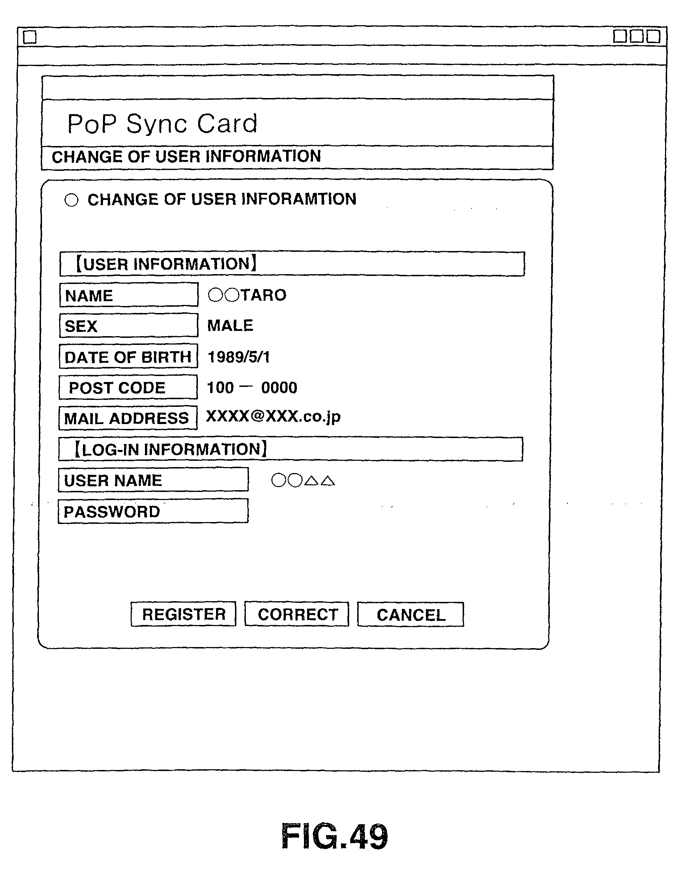

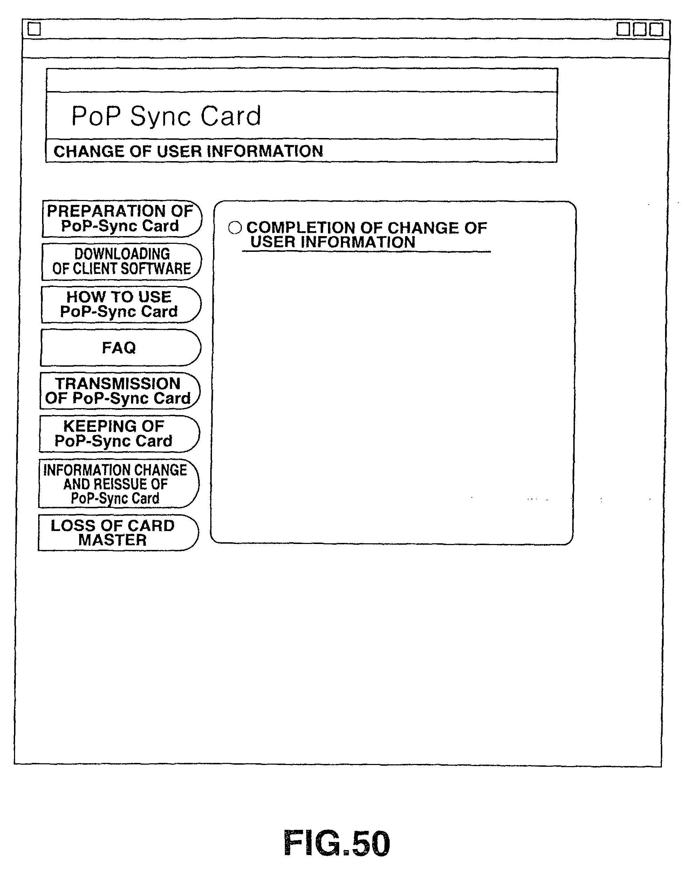

On the user information change screen of Fig.48 thus displayed, the operator inputs user information to be changed. As an initial display, the value stored in the user management table is displayed. When the input of the user information is completed and if a "confirm" button is pressed, input check is carried out (S4503) and the screen shifts to a change confirmation screen shown in Fig.49. On the change confirmation screen, the inputted user information is confirmed. If a "register" button is pressed, the database is updated with the displayed user information irrespective of the presence/absence of a change. If the database is correctly updated, the screen shifts to a change completion screen shown in Fig.50. When the operator wants to further change the user information, if a "correct" button is pressed, the screen shifts again to the change input screen shown in Fig.48 while the inputted value is held. The change of the user information is thus completed.

In the case where the change of the user information such as change of the e-mail address affects the card information, the change contents are also reflected on the card information. Moreover, the change contents are simultaneously reflected on the child cards distributed via the network, in accordance with the foregoing information change procedure.

### 4.8.4. Reflection of update information

The way of push distribution of information image card information including updated user information or card information to the client will now be described. The following case is used as an example. First, a producer and sender of an information image card is referred to as a user S, and a recipient who receives the information image card prepared by the user S is referred to as a user R. It is assumed that the information image card prepared by the user S is already distributed to the user R and that the user R has the information image card of the user S. The user R not only has the information image card prepared by the user S but also already has other information image cards prepared by a user F and a user G. In this example, after some time from the distribution of the information image card of the user S, the information contained in the information image card of the user S becomes obsolete and the user S updates the information image card of the user S in accordance with the above-described update processing. Since the update processing is carried out between the information image card management server 120 and the user S, the user R knows nothing about the update of the information image card of the user S.

If the above example is associated with Fig.39, the client software installed in the computer of the user S as the sender is denoted by 111S and the information image folder controlled by the client software 111S is denoted by 112S. In the information image folder 112S, the information image card of the user S registered as the card master of the user S is denoted by PC_S. The client software installed in the computer of the user R as the recipient is denoted by 111R and the information image folder controlled by the client software 111R is denoted by 112R. Since the user R has the information image cards which are push-distributed from the user S, user F and user G, the information image cards of the user S, user F and user G are registered to the information image folder 112R of the user R. In this example, the information image card of the user S is denoted by CC_S, the information image card of the user F is denoted by CC_F, and the information image card of the user G is denoted by CC_G. Using this example, the processing by the user R's client software 111R and the processing by the information image card management server 120 will be described in detail.

It is assumed that the user R, who previously received the information image card from the user S, wants to see the previously received information image card and starts the client software 111R installed in the user R's own computer. First, when the user R starts the client software 111R to display the information image folder 112R, the client software 111R accesses the information image client software administrative server 130.

The information image client software administrative server 130 authenticates whether the client software 111R installed in the user R's computer is the normal client software or not. Specifically, when the client software 111R accesses the information image client software administrative server 130, the client software ID and the registered user name provided for the client software 111R are transmitted to the administrative server 132. The administrative server 132 checks whether or not the received client software ID and registered user name are matched with the information managed by the database 134 for the information image client software administrative server. If the client software ID and the registered user name are matched with the information managed by the database 134 for the information image client software administrative server, it is determined that the client software 111R is the normal client software and a command to permit the start of the client software 111R is transmitted to the client 110R.

The information held by the client 110R as the information related to the information image card will be described hereinafter. In the above-described example, since the user R has already received the provision of the information image cards from the user S, user F and user G, it seems as if the detailed card information and user information contained in the information image cards of the user S, user F and user G were held in the storage device within the user R's computer. Actually, however, the detailed information related to the information image cards of the user S, user F and user G that have been already sent is not stored in the user R's computer at all. The information related to the information image cards of the user S, user F and user G is stored in the generation server database 123 and the information image card database 127 in the information card management server 120.

In short, even when the start of the client software 111R is permitted, the information image folder 112R cannot be normally displayed because the detailed information of the respective information image cards displayed in the information image folder 112R is not held.

Thus, the information management system of the present embodiment carries out the following processing. On receiving a command indicating the permission to start the client software from the information image client software administrative server 130, the client software 111R accesses the generation server 121 of the information image card management server 120 and transmits a request command thereto. This request command is a command for requesting push distribution of the detailed information related to the respective information image cards displayed in the information image folder 112R. In this case, the client software 111R transmits the client ID provided for the client 110R to the generation server 121. The generation server database 123 connected to the generation server 121 has the client ID and the card ID associated with each other and stored in the bitcard_cardinfo table related to the information image card. In the above-described example, the client ID provided for the user R is associated with the card ID indicating the information image card CC_S transmitted from the user S, the card ID indicating the information image card CC_F transmitted from the user F and the card ID indicating the information image card CC_G transmitted from the user G. In short, referring to the information in the bitcard_cardinfo table holding the information related to the information image cards registered to the generation server database 123, the generation server 121 obtains the card ID corresponding to the client ID and also obtains the detailed information of the information image card identified by the card ID. The detailed information includes, for example, the image data representing the information image card, the user information and the card information registered to the information image card accessed by the user's right clicking, and an update flag indicating whether the information image data is newly updated information or not. The generation server 121 push-distributes the information image card CC_S of the user S, the information image card CC_F of the user F and the information image card CC_G of the user G to the client 110R.

The client software 111R receives the detailed information related to the information image card CC_S of the user S, the detailed information related to the information image card CC_F of the user F and the detailed information related to the information image card CC_G of the user G from the generation server 121, and displays the information image cards within the information image folder 112R. In this case, if the update flag contained in each of the information image cards indicates that the push-distributed information image card is an updated information image card, the updated information image card displayed in the information image folder 112R is highlighted. In this example, since the information image card CC_S of the user S is an updated information image card, the information image card CC_S of the user S is highlighted in the information image folder 112R, compared with the information image cards CC_F and CC_G.

In this manner, according to the information management system of the present invention, the user of the client 110 can automatically learn that the information of the information image card is updated, without accessing the predetermined server to confirm whether the information of the information image card registered to the folder is updated or not. Moreover, the user of the client 110 can automatically receive the information related to the information image card holding the updated latest information by push distribution from the information image card management server 120.

As described above, in the information update procedure for the information image card according to the present embodiment, the information related to the information image card is monistically managed by the information image card management server 120. Therefore, if the data of the parent card of the information image card managed by the information image card management server 120 is changed via the parent card PC, the change contents are reflected on all the child cards CC distributed via the network. Specifically, instead of redistributing the information related to the changed information image card to each client when the information image card is changed, the information of the changed information image card is push-distributed to each client when the client software is started in the recipient client. In other words, it seems to the client 110R on the recipient side as if the information image card management server 120 and the client software 111R were constantly communicating with each other so as to display the latest data of the information image card in the information image folder 112R. Actually, however, the detailed information of the information image card is push-distributed from the information image card management server 120 when the client software 111R is started.

Therefore, for example, even in the case where the owner of the information image card is transferred to another office and his/her address is changed, only changing the registered information of the parent card PC suffices to reflect the change contents on all the distributed child cards CC without redistributing the child cards. Thus, very efficient information management is made possible for the owner of the information image card (card issuer). For example, in the case where the information image card has fixed information that cannot be updated by the information distributor, the information of the information image card distributed to each client will soon become obsolete and become less useful to the recipient. However, the information of the information image card of the present embodiment can be constantly updated by the information distributor and the latest information image card is constantly provided for the recipient. Therefore, the information is very advantageous to the recipient.

Although in the above-described embodiment, the information change is simultaneously reflected on all the child cards CC distributed via the network, the present invention is not limited to this embodiment. As a matter of course, it is also possible to selectively reflect the information change only on some of the child cards CC and not to reflect the information change on the other child cards CC.

### 4.9. Diary function

The diary function which is characteristic to the information image card of the present embodiment will now be described in detail. With respect to the diary, diary setting for initial setting of a diary, entry in the diary for entering into the diary, diary list for displaying a list of diaries, and diary browsing for browsing the diary and adding a comment will be described. In the present specification, a diary is a public information space in which the contents can be updated regularly or irregularly, and is constituted by a title, texts and attached drawing(s). In the information management system according to the present embodiment, the diary also functions as a community space for exchanging information image cards between the owner of the diary and a third party, or between third parties who browsed the diary. In the present specification, such a public information space or community space is referred to as a diary, as a matter of convenience. However, it is a matter of course that an object having similar functions can also be prescribed with another name. It is to be understood that such an object, too, falls within the technical scope of the present invention.

### 4.9.1. Setting of diary

If a diary is not set up, initial setting of a diary is carried out from the parent card PC. The user can set the appearance, for example, theme color, of the diary from prepared templates.

### 4.9.2. Entry in diary

The diary in the information image card imitates the style of a typical diary. Therefore, the user can enter in the diary everyday and correct the description which was entered in the past. Since the diary is made public to third parties, a third party who browsed the diary can make comments on the diary and request for exchange of information image cards to the owner of the diary or another third party who made a comment on the diary.

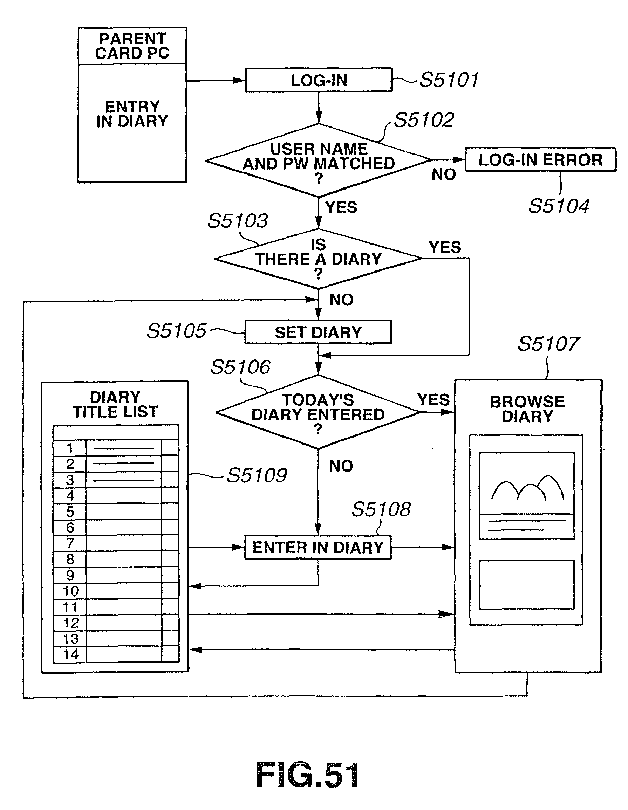

The procedure for entering in the diary will now be described with reference to the diary entry flow shown in Fig.51.

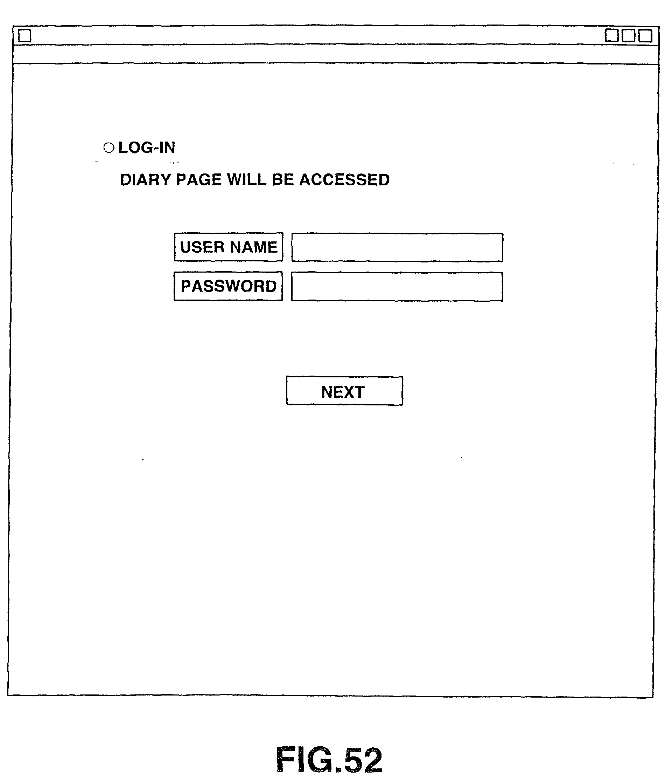

In entry in the diary, first, log-in is made on a log-in screen as shown in Fig.52 (S5101). On the log-in screen, user authentication is carried out on the basis of the user name and the password. If the user name and the password are matched in the user authentication, it is confirmed whether a diary is already set up or not (S5103). In the case of failure in the user authentication on the log-in screen, the screen shifts to a log-in error screen (S5104).

If a diary is not set up, the screen shifts to a screen for setting a diary (S5105). Then, a diary is newly set up. In the present embodiment, a diary is set up by selecting a template prepared by the system in order to facilitate the management. However, the user can also employ a diary prepared by himself/herself in conformity with the specifications of the system.

If a diary is already set up, it is confirmed whether today's diary (diary for diary access date) is already entered or not (S5106). If today's diary is not entered, the screen can be shifted to a diary entry screen shown in Fig.53 so as to enter in the diary (S5108). Moreover, if the user already entered in the diary but wants to change the contents, the screen can be shifted to the diary entry screen shown in Fig.53 so as to enter in the diary (change the contents of the diary).

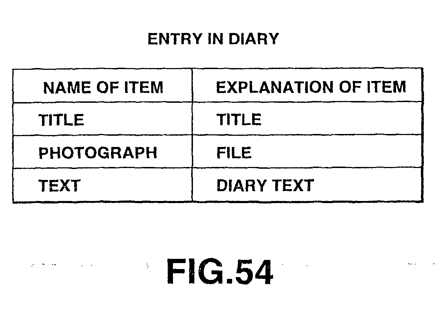

The entry items of the diary include at least a diary title, an image file such as a photograph, and a diary text, as shown in Fig.54. These pieces of information are registered as a bitcard_diaryday table to the information image card database 127. It is also possible to add a predetermined attachment file. On the diary entry screen shown in Fig.53, the user can register that day's diary and correct the diary registered in the past. On completion of the input of necessary entry items, a "register" button is pressed to complete the registration.

After the registration of the diary, the related information related to the diary on the child card is updated. Specifically, since the contents of the diary can be browsed not only by the owner of the diary but also by the owner of the child card, the owner of the child card distributed via the network is notified of the change of the contents of the diary by push distribution. That is, a newly provided menu item of "see diary" is updated and made usable on the child card. Consequently, the owner of the child card can browse the updated or changed contents of the diary by selecting the menu item "see diary" which indicates the browsing of the diary from the operation window displayed by right clicking on the child card.

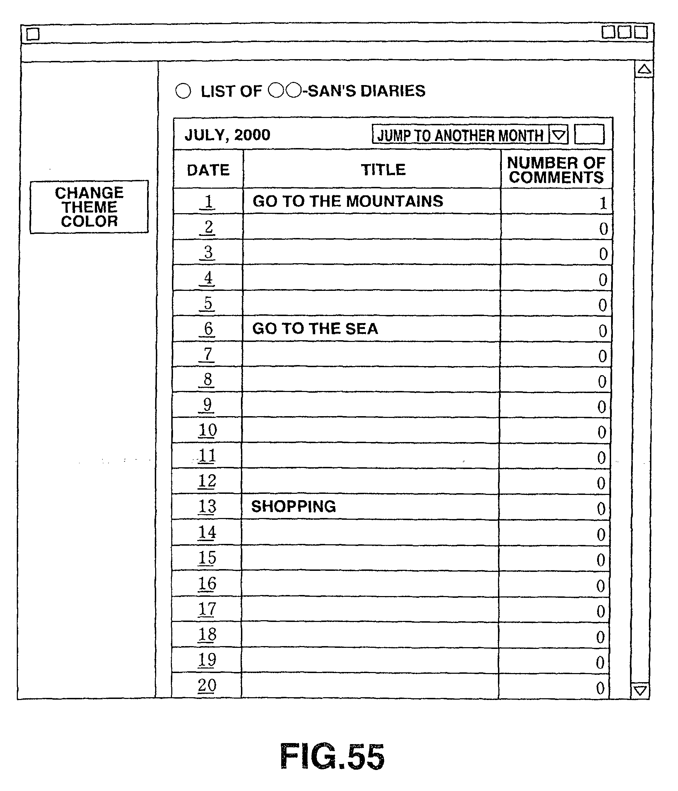

Fig.55 shows a diary title list screen. As shown in Fig.55, the diary title list screen displays a list of diaries. For the days on which the diary was kept, the diary title and the number of comments are displayed. When the date is clicked, the screen shifts to the diary entry screen for entry/correction in the diary. When the title is clicked, the screen shifts to a diary browsing screen.

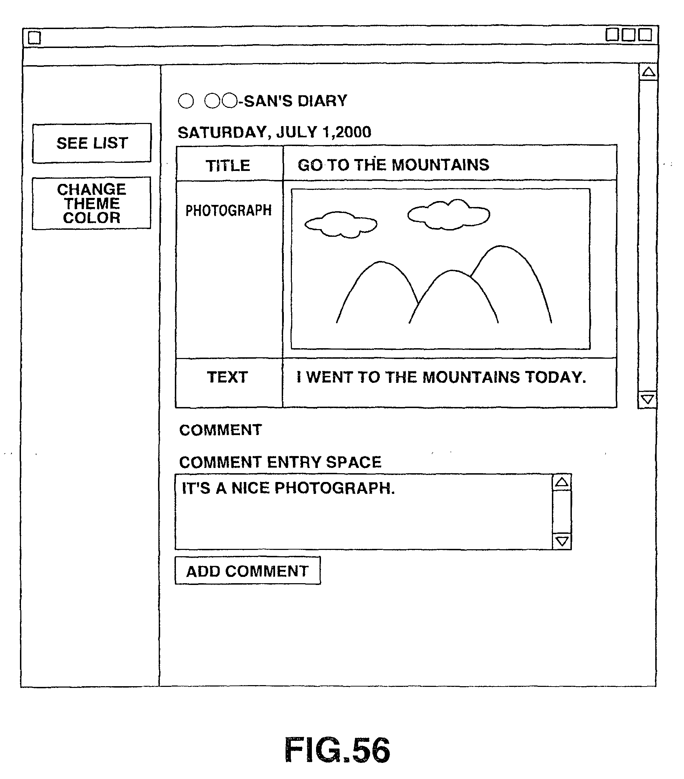

Fig.56 shows a diary browsing screen, that is, an exemplary display of the diary displayed on the display device of the client. The diary browsing screen is a screen which not only the owner of the diary but also the owner of the child card distributed via the network can access and freely browse by selecting the browsing of the diary from the operation window displayed by right clicking on the child card.

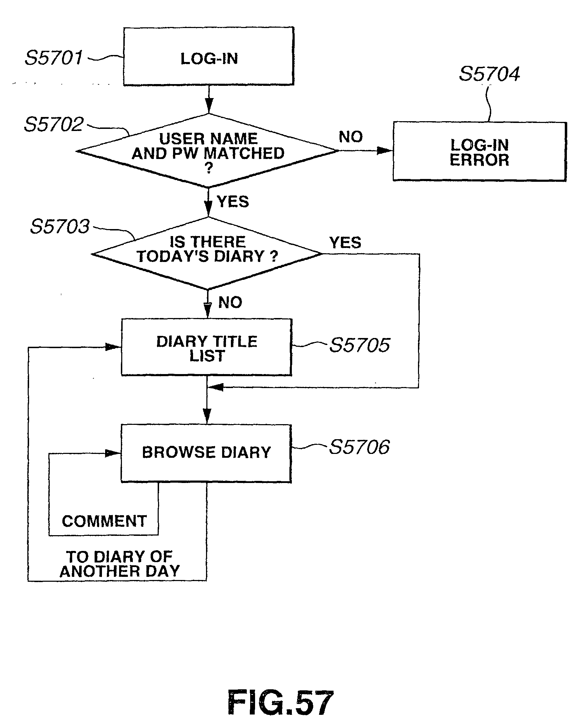

The diary browsing function which enables addition of a comment to the registered diary will now be described with reference to Fig.57.

### 4.9.3. Browsing of diary

As is described already, with the information image card according to the present embodiment, not only the owner of the diary but also a user who is a third person visiting the diary from the child card can browse the diary. The browsing person can add a comment to the diary. With such a structure, the diary functions as a public information space. As will be described later, the diary also functions as a community space which enable exchange of information image cards between the owner of the diary and a visitor or between visitors to the diary.

Fig.57 shows the diary browsing flow. As shown in Fig.57, first, the user who selected the browsing of the diary from the child card carries out log-in to the information image card web server (S5701). On a log-in screen, user authentication is carried out on the basis of the user name and the password. If the user name and the password are matched, it is confirmed whether there is a today's diary or not (S5702). In the case of failure in the user authentication on the log-in screen, the screen shifts to a log-in error screen (S5704).

If it is determined at step S5703 that there is no today's diary, a diary title list is displayed (S5705). The browsing person can select the diary of the day which he/she wants to browse from the title list. In the diary title list, a list of diary titles of that month is displayed. With respect to the days for which the diary is not registered, no title is displayed. When a title (diary) is clicked (selected), the screen shifts to a browsing screen and the user can browse the selected diary.

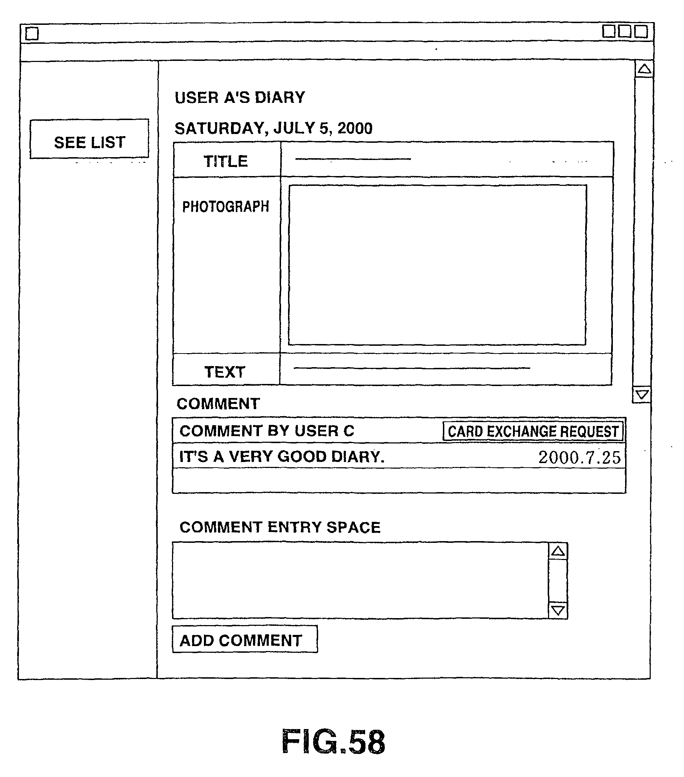

If there is a today's diary, the browsing person can browse the diary of that day (S5706). Fig.58 shows a diary browsing screen. As shown in Fig.58, in the diary, a card exchange request button for registering exchange of cards is prepared in addition to a comment space which enables addition of a comment.

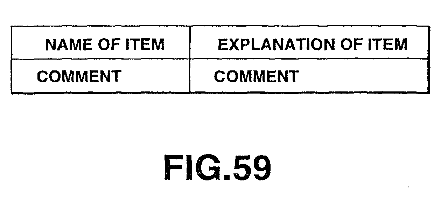

As the browsing person adds a comment to the browsed diary, the comment is registered as a bitcard_diarycomm as shown in Fig.59 to the information image card database 127. When a comment is added, the entered comment is registered and the diary is displayed again. When a comment is added, the number of comments is displayed in the diary title list, as shown in Fig.55.

When "card exchange request" in the comment space is clicked, exchange of information image cards can be requested to the user who made the comment. When the browsing person requests exchange of cards, information related to the card exchange request is registered as a bitcard_keep table to the information image card database 127. The card exchange function will be later described in detail. Although the comment space and the exchange of information image cards can be provided as independent functions, the description in the comment space can be made a requisite item for the registration of the exchange of information image cards. By thus associating these functions, the user can learn the mood of the counterpart of the exchange of information image cards in advance and can smoothly carry out the procedure for exchanging the information image cards.

### 4.10. Information image card exchange function

In the information management system according to the present embodiment, the diary not only functions as a public information space but also functions as a community space for exchange of information. Specifically, the information image cards can be exchanged between the owner of the diary and a diary browsing person or between diary browsing persons via the community space of the diary accompanying the information image card. Hereinafter, the information image card exchange function using the diary will be described with reference to the attached drawings.

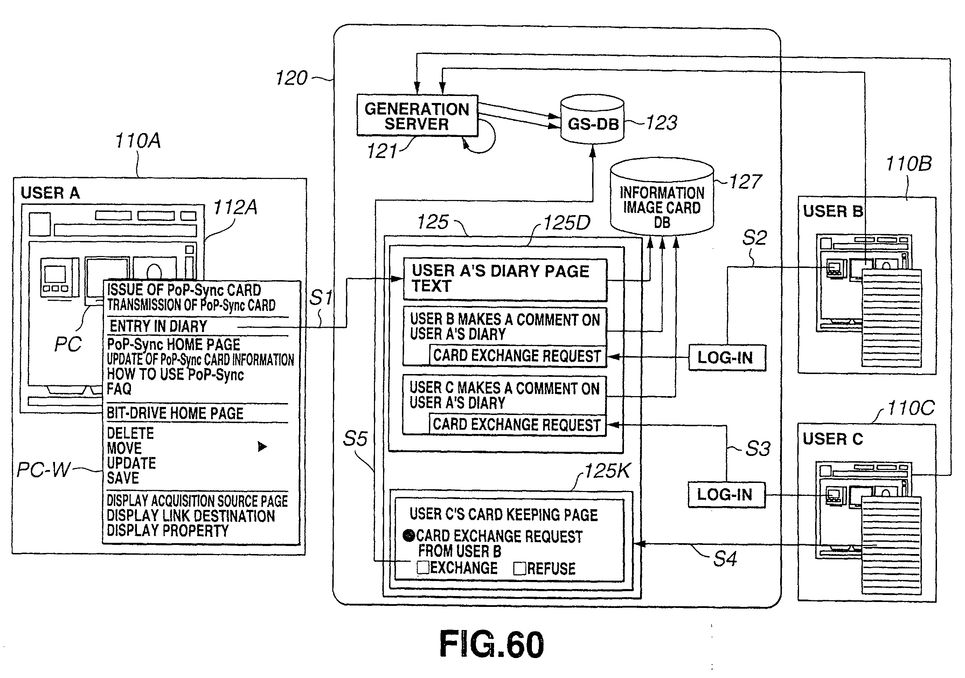

First, actual exchange of information image cards will be described with reference to Fig.60. In the example shown in Fig.60, a user A, which is the owner of the parent card of the information image card, transmits child cards to a user B and a user C. The user B and the user C do not know each other. In this circumstance, the information image cards can be exchanged between the user A, who is the owner of the diary, and the user B or the user C, who is a diary browsing person, or between the user B and the user C, who are both diary browsing persons, via the diary of the user A.

First, the user A selects "entry in diary" from the menu displayed by making right clicking on the parent card PC owned by the user A himself/herself, and enters in the diary (S1 of Fig.60). When the diary is prepared by the user A, the information image card web server 125 registers the contents of the diary as a bitcard_diaryday table to the information image card database 127.

Both the user B and the user C own the child cards CC distributed from the user A and therefore can make log-in to the diary of the user A (S2 and S3 of Fig.60). Specifically, the information image card web server 125 refers to the bitcard_diaryday table stored in the information image card database 127 and constitutes a web page for the diary prepared by the user A, in accordance with the bitcard_diaryday table. The information image card web server 125 displays the web page on the web browser started on the computer of the client 110B or 110C.

In this manner, the user B and the user C can browse the user A's diary and add respective comments to the user A's diary, using their child cards CC. The comments can be browsed not only by the user A, who is the owner of the diary, but also by the user B or the user C, who is a diary browsing person. That is, in the present embodiment, there is provided an opportunity to form new communication between the user A, who is the owner of the diary, and the user B or the user C, who is a diary browsing person, or between the user B and the user C, both of whom are diary browsing persons, through the diary text and comments.

The card exchange method between the clients will now be described in detail, using an example of the exchange of information image cards between the user B and the user C, both of whom are diary browsing persons. In this example, the user B sees the user C's comment on the user A's diary and requests exchange of cards with the user C.

First, to exchange cards with the user C, the user B must browse the web page of the diary (Fig.58) prepared by the user A provided by the information image card web server 125. In this case, if the user C's comment on the user A's diary is described, it is possible to exchange the information image cards with the user C. When requesting card exchange with the user C, the user B presses a "card exchange request" button arranged in the comment space where the user C described his/her comment, in the user A's diary shown in Fig.58.

On receiving the command indicating the request for card exchange from the user B, the information image card web server 125 prepares a bitcard_keep table made up of the card ID of the user C's information image card, the card ID of the user B's information image card, and the user information such as the name, sex, age and address of the user B, and registers the table to the information image card database 127. The reason for registering not only the information image card ID of the user B but also the detailed user information such as the sex, age and address of the user B is that the user C needs to be notified of the information that "a user B wants to exchange cards with the user C and the user B is a person who has such information."

The user C is notified of the request for card exchange from the user B by an electronic mail. In this electronic mail, the URL to access the user C's card keeping page is described. When the user C clicks this URL, the information image card web server 125 displays the user C's card keeping page 125K on the web browser of the client 110C (S4 of Fig.60). On the user C's card keeping page 125K, the information that the exchange of cards is requested from the user, a check box for deciding whether to accept or refuse the exchange request, and the user information including the name, sex, age and address of the user B are described. The card keeping page 125K is a web page prepared by the information image card web server 125 with reference to the information registered to the bitcard_keep table.

In this information management system, the reason for providing the function of the card keeping page is that, in this example, the user C might refuse to exchange the information with the user B even if the user B wants to exchange the information with the user C. Thus, in the information management system, when there is a request for card exchange from another client, the information image card of the person who wants to exchange the cards is temporarily kept and whether or not the client who received the card exchange request wants to exchange the cards is confirmed, instead of immediately carrying out the exchange of cards.

When the user C agrees to exchange the cards with the user B, the processing for exchanging the information image cards of the user C and the user B must be carried out. Therefore, the information image card web server 125 instructs the generation server 121 to carry out the processing for exchanging the information image cards of the user C and the user B.

As is described already, the information image card database 127 has the bitcard_cardinfo table in which the user ID of the client and the card ID indicating the information image card distributed to the client are associated with each other and thus stored. For example, in the case where the information image cards of the user F and the user G are already distributed to the client of the user R, the bitcard_cardinfo table in which the user ID of the user R and the card ID of the user F's information image card are associated with each other and the bitcard_cardinfo table in which the user ID of the user R and the card ID of the user G's information image card are associated with each other are registered to the information image card database 127. In the generation server database 123, a table substantially similar to the bitcard_cardinfo table registered to the information image card database 127 is stored, and the generation server 121 push-distributes the detailed information of the information image card to the information image folder 112 of the client 110 in accordance with the bitcard_cardinfo table registered to the database 123. As a result, the two information image cards of the user F and the user G are displayed in the information image folder 112.

On the basis of the structure and processing of the generation server 121, the processing carried out by the generation server 121 when it is instructed by the information image card web server 125 to carry out the processing for exchanging the information image cards of the user C and the user B will be described.

First, the generation server 121 newly prepares a bitcard_cardinfo table in which the user ID of the user C and the card ID of the user B's information image card are associated with each other, referring to the detailed information related to the user B's information image card registered to the database 123. Similarly, the generation server 121 newly prepares a bitcard_cardinfo table in which the user ID of the user B and the card ID of the user C's information image card are associated with each other. In short, the generation server 121 newly prepares two bitcard_cardinfo tables and registers these tables to the generation server database 123. At this point, the generation server 121 does not carry out push distribution of the user C's information image card to the client 110B of the user B. This is because the information image card push-distributed from the generation server 121 cannot be received if the client software is not started at the client 110B of the user B. For a similar reason, the generation server 121 does not carry out push distribution of the user C's information image card to the client 110C of the user C.

The respective information image cards are push-distributed to the clients when the client software is started at the respective clients, not when the two bitcard_cardinfo tables are prepared by the generation server 121. Specifically, when the user B starts the client software to see the information image card registered to his/her information image folder, the user C's information image card is push-distributed from the generation server 121. The push distribution when the client software is started is described already and therefore will not be described further in detail. Similarly, when the user C starts the client software to see the information image card registered to his/her information image folder, the user B's information image card is push-distributed from the generation server 121. Thus, the exchange of the information image cards is completed.

Thus, in the present embodiment, by using community space of the diary, the information image cards can be exchanged between the user A, who is the owner of the diary, and the user B or the user C, who is a diary browsing person, or between the user B and the user C, both of whom are diary browsing persons. That is, new communication can be formed by using the public information space of the diary.

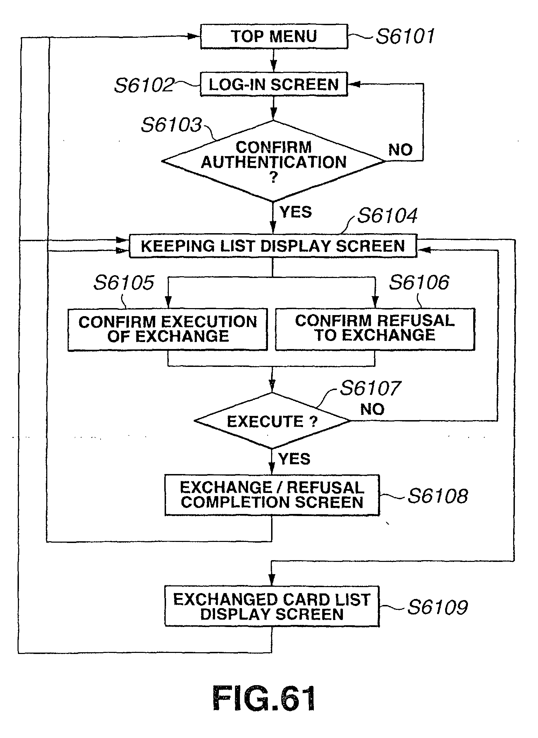

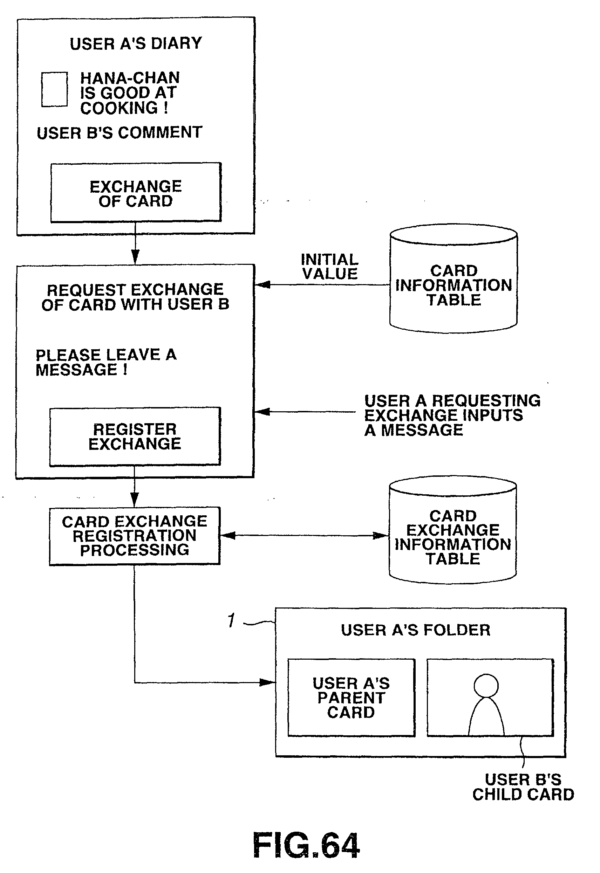

Hereinafter, the procedure for keeping and exchanging information image cards using the information management system according to the present embodiment will be described with reference to Figs.61 to 64.

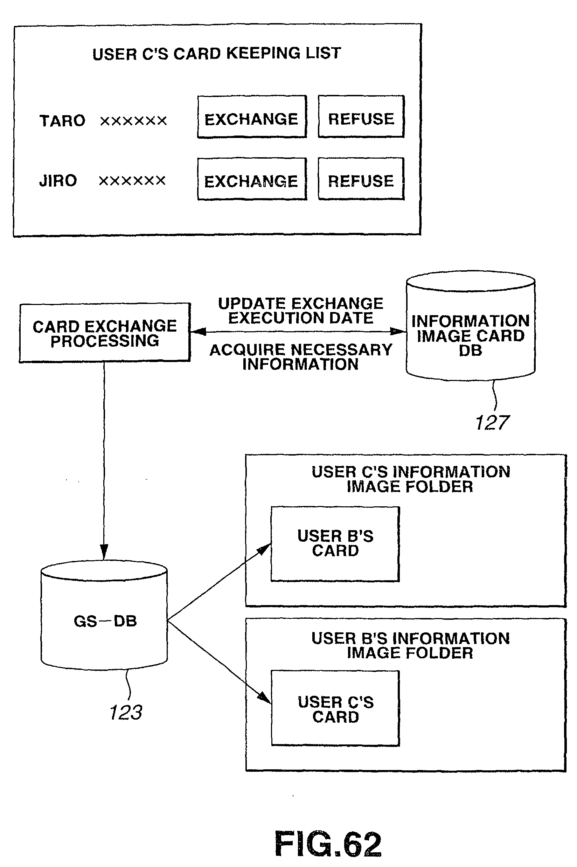

As shown in Fig.61, the card keeping flow is entered from the operation window of the child card or from the top menu of the information image management server (S6101). On a log-in screen (S6102), after the confirmation of authentication (S6103), a card keeping list and an exchanged card list are displayed. The operator can carry out the exchange of cards and the refusal to exchange with reference to these lists (S6104). Fig.62 shows an exemplary screen (web page) of the card keeping list.

The card keeping list screen will now be described. The card keeping list screen is a web page generated on the basis of the bitcard_keep table registered to the card exchange information table 127. The owner of the card keeping list screen can carry out the exchange of cards or the refusal to exchange with respect to the requesting person by pressing an "exchange" button or a "refuse" button displayed for each person who requests the exchange in the card keeping list.

For example, when the user presses the "exchange" button (S6105) and agrees to the exchange of cards with the person who requests the exchange of cards (S6107), the card of the person who request the exchange is displayed in the user's information image folder and the user's card is displayed in the information image folder of the person who requests the exchange in accordance with the above-described procedure. After the execution, the keeping list is displayed again, from which the target person is excluded.

On the other hand, when the "refuse" button is pressed (S6106) and the refusal to exchange with the person who requests the exchange of cards is carried out (S6107), the display of the information of the target person who requests the exchange in the keeping list is suspended. After the execution, the keeping list is displayed again, from which the target person is excluded.

The exchanged information image card list (S6109) is registered to the card exchange information table and thus managed. By pressing an "exchanged card list" button, the list of exchange requesting persons who exchanged cards from the keeping list can be displayed.

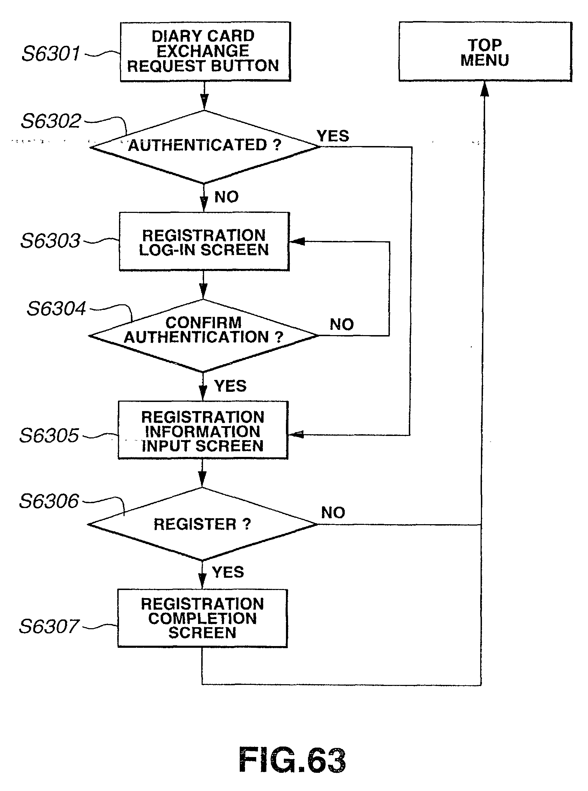

The registration information input flow will now be described with reference to Fig.63. First, a message to be displayed in the information image card keeping list or the like is inputted and registered to the exchange/keeping of the information image card. Since cards are usually exchanged with a user who entered a comment on the diary browsing screen, registration to the information image card exchange/keeping is carried out from the diary browsing screen.

In one of the diaries as shown in Fig.58, a "request" button for requesting the exchange of information image cards is pressed (S6301). In this case, it is confirmed whether the user information of the exchange requesting person is already authenticated or not (S6302). However, if the user authentication is already made as in the case where exchange/keeping registration is to be carried out from the diary browsing screen, the screen shifts to a registration information input screen without displaying a registration log-in screen (S6305). On the other hand, if the authentication of the user information is not completed, the screen shifts to the registration log-in screen (S6303), and after the authentication is confirmed (S6304), the screen shifts to the registration information input screen (S6305).

On the registration information input screen, an "exchange registration" button is pressed to add the registration input information to the card exchange information table and the screen shifts to a registration completion screen (S6307). On the registration completion screen, a message is displayed which indicates that the registration to the information image card exchange/keeping is completed.

When the user agrees to the exchange of information image cards with the exchange requesting person with reference to the information image card exchange/keeping, the information image card (child card) is pushed to the counterpart and the exchange of the information image cards is completed.

In this manner, in the present embodiment, the information image cards can be exchanged between the user B and the user C, both of whom are diary browsing persons, by using the community space of the diary. That is, new communication can be formed by using the public information space of the diary.

The preferred embodiments of the information management system according to the present invention are described above with reference to the attached drawing. However, the present invention is not limited to such embodiments. It is obvious to a person skilled in the art that various changes and modifications can be effected without departing from the scope of the technical idea described in the claims, and that such changes and modifications fall within the technical scope of the present invention.

### Industrial Applicability

As is described above, according to the present invention, an information image card can be provided as a new communication tool of a cyber business card system, using an information image that can be distributed on a network. According to the present invention, by monistically managing the distribution of information image cards distributed over the network, it is possible to easily carry out update and deletion of information accompanying the information image cards and tracing of the destination of transmission. Moreover, according to the present invention, a new information exchange space can be provided adding a communication space of a diary to the information image card.

## Claims

1. An information management system comprising:
one or more clients capable of using an information image card apparatus;
an information image card management server for managing the information image card apparatus; and
a network for connecting the clients with the information image card management server in such a manner as to enable bidirectional communication;
wherein the information image card apparatus is constituted as an information unit having image information and related information linked with each other and comprises a parent card apparatus held at the client and a child card apparatus which can be distributed over the network; and
wherein on receiving a request from one client, the information image card management server issues a parent card apparatus proper to the one client.

2. The information management system as claimed in claim 1, wherein the information image card apparatus is usable on client software for information image to be started on one of the clients connected to the network.

3. The information management system as claimed in claim 1, wherein the child card apparatus is generated on the basis of the parent card apparatus.

4. The information management system as claimed in claim 1, wherein the parent card apparatus is issued after the completion of user registration for registering user information and card information registration for registering card information embedded in the child card apparatus.

5. The information management system as claimed in claim 1, wherein the child card apparatus is transmitted from a sender client which holds the parent card apparatus to a recipient client as an attachment file of an electronic mail.

6. The information management system as claimed in claim 1, wherein the related information leads an operator to a predetermined operation.

7. The information management system as claimed in claim 1, wherein the information image card management server monistically manages the distribution of the child card over the network.

8. The information management system as claimed in claim 1, wherein a change of the information image card based on the parent card apparatus is reflected on all the child card apparatuses distributed over the network.

9. An information image card management server for managing an information image card apparatus constituted as an information unit having image information and related information linked with each other,
wherein the information image card apparatus is constituted as an information unit having image information and related information linked with each other and comprises a parent card apparatus held at a client and a child card apparatus which can be distributed on a network, and
wherein in response to a request from one client, the information image card management server issues a parent card apparatus proper to the one client.

10. The information image card management server as claimed in claim 9, wherein the child card apparatus is generated on the basis of the parent card apparatus.

11. The information image card management server as claimed in claim 9, wherein the information image card management server issues the parent card apparatus after the completion of user registration for registering user information and card information registration for registering card information embedded in the child card apparatus.

12. The information image card management server as claimed in claim 9, wherein the information image card management server monistically manages the distribution of the child card over the network.

13. The information image card management server as claimed in claim 9, wherein the information image card management server manages a change of the information image card made on the basis of the parent card and reflects the change of the information image card on all the child card apparatuses distributed over the network.

14. A client capable of using an information image card apparatus,
wherein the information image card apparatus is constituted as an information unit having image information and related information linked with each other and comprises a parent card apparatus held at the client and a child card apparatus which can be distributed on a network, and
wherein on receiving the issue of a parent card apparatus proper to the client, the child card apparatus can be issued on the basis of the parent card apparatus to an information image card management server for managing the information image card apparatus.

15. The client as claimed in claim 14, wherein the information image card apparatus is usable on client software for information image to be started on one of the client connected to the network.

16. The client as claimed in claim 14, wherein the parent card apparatus is issued after the completion of user registration for registering user information and card information registration for registering card information embedded in the child card apparatus.

17. The client as claimed in claim 14, wherein the child card apparatus is transmitted from a sender client which holds the parent card apparatus to a recipient client as an attachment file of an electronic mail.

18. The client as claimed in claim 14, wherein the related information leads an operator to a predetermined operation.

19. The client as claimed in claim 14, wherein the distribution of the child card apparatus over the network is monistically managed by the information image card management server.

20. The client as claimed in claim 14, wherein a change of the information image card apparatus made on the basis of the parent card apparatus is reflected on all the child card apparatuses distributed over the network.

21. An information image card apparatus comprising:
a parent card apparatus proper to each client which is constituted as an information unit having image information and related information linked with each other and is issued by an information image card management server; and
a child card apparatus which is generated at the client on the basis of the parent card apparatus and can be distributed on a network enabling bidirectional communication.

22. An information management method using an information image card constituted as an information unit having image information and related information linked with each other, the method comprising:
a step for an information image card management server to accept a request from one client and issue a parent card apparatus proper to the one client;
a step for the client to issue a child card apparatus on the basis of the parent card apparatus; and
a step for the information image card management server to distribute the child card apparatus from a sender client which holds the parent card apparatus to a recipient client via a network.

23. An information management system comprising:
two or more clients capable of using an information image card apparatus;
an information image card management server for managing the information image card apparatus; and
a network for connecting the clients with the information image card management server in such a manner as to enable bidirectional communication;
wherein the information image card apparatus is constituted as an information unit having image information and related information linked with each other and comprises a parent card apparatus held at the client and a child card apparatus which can be distributed over the network; and
wherein the information image card management server permits exchange of only child card apparatuses between the clients which agreed to exchange information image cards with each other.

24. An information image card management server for managing an information image card apparatus constituted as an information unit having image information and related information linked with each other,
wherein the information image card apparatus is constituted as an information unit having image information and related information linked with each other and comprises a parent card apparatus held at a client and a child card apparatus which can be distributed on a network, and
wherein the information image card management server permits exchange of only child card apparatuses between the clients which agreed to exchange information image cards with each other.

25. An information management method using an information image card constituted as an information unit having image information and related information linked with each other,
wherein the information image card apparatus is constituted as an information unit having image information and related information linked with each other and comprises a parent card apparatus held at the client and a child card apparatus which can be distributed over the network, and
wherein an information image card management server manages an information image card exchange keeping space for each client, and an information card exchange requesting client carries out registration to the card exchange keeping space of an information card exchange requested client, so that exchange of the information image cards is carried out only when the information card requested client permits exchange of the information image card apparatuses.

26. An information management method using an information image card constituted as an information unit having image information and related information linked with each other,
wherein the information image card apparatus is constituted as an information unit having image information and related information linked with each other and comprises a parent card apparatus held at the client and a child card apparatus which can be distributed over the network, and
wherein an information image card management server manages a common information image card exchange keeping space common to a plurality of clients, and an information card exchange requesting client carries out registration to the common information image card exchange keeping space, so that exchange of the information image cards is carried out only when the information card requested client permits exchange of the information image card apparatuses.

27. An information management system comprising:
one or more clients capable of using an information image card apparatus;
an information image card management server for managing the information image card apparatus; and
a network for connecting the clients with the information image card management server in such a manner as to enable bidirectional communication;
wherein the information image card apparatus is constituted as an information unit having image information and related information linked with each other and comprises a parent card apparatus held at the client and a child card apparatus which can be distributed over the network; and
wherein the information image card management server monistically manages the distribution of the child card apparatus over the network.

28. An information image card management server for managing an information image card apparatus constituted as an information unit having image information and related information linked with each other,
wherein the information image card apparatus comprises a parent card apparatus held at a client and a child card apparatus which can be distributed on a network, and
wherein the information image card management server monistically manages the distribution of the child card apparatus over the network.

29. A client capable of holding an information image card apparatus constituted as an information unit having image information and related information linked with each other,
wherein the information image card apparatus comprises a parent card apparatus held at the client and a child card apparatus which can be distributed on a network, and
wherein a parent card apparatus capable of monistically changing information related to the child card apparatus over the network is held.

30. A client capable of holding an information image card apparatus constituted as an information unit having image information and related information linked with each other,
wherein the information image card apparatus comprises a parent card apparatus held at the client and a child card apparatus which can be distributed on a network, and
wherein a child card apparatus on which a change of information made via the parent card apparatus is monistically reflected is held.

31. An information management method using an information image card constituted as an information unit having image information and related information linked with each other, the method comprising:
a step for an information image card management server to accept a request from one client and issue a parent card apparatus proper to the one client;
a step for the client to issue a child card apparatus on the basis of the parent card apparatus; and
a step for the information image card management server to monistically manage the distribution of the child card apparatus on a network.

32. An information management system comprising:
one or more clients capable of using an information image card apparatus;
an information image card management server for managing the information image card apparatus; and
a network for connecting the clients with the information image card management server in such a manner as to enable bidirectional communication;
wherein the information image card apparatus is constituted as an information unit having image information and related information linked with each other and comprises a parent card apparatus held at the client and a child card apparatus which can be distributed over the network; and
wherein the information image card management server manages a public information space in which public information can be uploaded for each client.

33. An information image card management server for managing an information image card apparatus constituted as an information unit having image information and related information linked with each other,
wherein the information image card apparatus is constituted as an information unit having image information and related information linked with each other and comprises a parent card apparatus held at a client and a child card apparatus which can be distributed on a network, and
wherein the information image card management server manages a public information space in which public information can be uploaded for each client.

34. A client capable of holding an information image card apparatus constituted as an information unit having image information and related information linked with each other,
wherein the information image card apparatus is constituted as an information unit having image information and related information linked with each other and comprises a parent card apparatus held at the client and a child card apparatus which can be distributed on a network, and
wherein public information can be uploaded to a public information space managed by an information image card management server.

35. An information management method using an information image card apparatus constituted as an information unit having image information and related information linked with each other,
wherein the information image card apparatus is constituted as an information unit having image information and related information linked with each other and comprises a parent card apparatus held at a client and a child card apparatus which can be distributed on a network,
an information image card management server manages a public information space for each client, and
the client can upload public information to the public information space.

36. An information management system comprising:
one or more clients capable of using an information image card apparatus;
an information image card management server for managing the information image card apparatus; and
a network for connecting the clients with the information image card management server in such a manner as to enable bidirectional communication;
wherein the information image card apparatus is constituted as an information unit having image information and related information linked with each other and comprises a parent card apparatus held at the client and a child card apparatus which can be distributed over the network; and
wherein the child card apparatus is transmitted to a recipient as an attachment file of an electronic mail.

37. An information image card management server for managing an information image card apparatus constituted as an information unit having image information and related information linked with each other,
wherein the information image card apparatus comprises a parent card apparatus held at a client and a child card apparatus which can be distributed on a network, and
wherein the information image card management server transmits the child card to a recipient as an attachment file of an electronic mail in response to a request from a sender.

38. A client capable of holding an information image card apparatus constituted as an information unit having image information and related information linked with each other,
wherein the information image card apparatus comprises a parent card apparatus held at the client and a child card apparatus which can be distributed on a network, and
wherein the child card apparatus is generated on the basis of the parent card apparatus held thereat and the child card is transmitted as an attachment file of an electronic mail.

39. A client capable of holding an information image card apparatus constituted as an information unit having image information and related information linked with each other,
wherein the information image card apparatus comprises a parent card apparatus held at the client and a child card apparatus which can be distributed on a network, and
wherein the client has client software for information image for receiving and expanding the child card apparatus generated on the basis of the parent card apparatus held by a sender.

40. An information management method using an information image card constituted as an information unit having image information and related information linked with each other, the method comprising:
a step for an information image card management server to accept a request from one client and issue a parent card apparatus proper to the one client;
a step for the client to issue a child card apparatus on the basis of the parent card apparatus; and
a step of transmitting the child card apparatus as an attachment file to another client.

41. An information management method for managing information transmitted and/or received among a plurality of clients to realize communication among the plurality of clients on a computer network, the method comprising:
a step of receiving, from a sender client, an information image card containing information proper to the sender and image data expressing the sender;
a step of sending the information image card to a plurality of recipient clients designated by the sender client;
a step of managing information related to the information image card by holding the contents contained in the information image card and the sending destination information of the plurality of recipient clients to which the information image card is sent; and
a step of updating the contents of the information image card sent to the plurality of recipient clients in the case where the information contained in the information image card is updated by the sender client.

42. A supporting method for supporting exchange of information among a plurality of clients to realize a community among the plurality of clients using a computer network, the method comprising:
a step of providing each of the plurality of clients with a tool for preparing an information image card containing the contents made up of information proper to the client and image data expressing a sender;
a step of receiving the information image card from the sender client;
a step of managing the distribution of the information image card on the computer network by holding the contents contained in the information image card and the sending destination information of the plurality of recipient clients to which the information image card is sent; and
a step of updating the contents of the information image card sent to the plurality of recipient clients in the case where the information contained in the information image card is updated by the sender client.
